# EUROPEAN PATENT SPECIFICATION

(11) **EP 2 420 951 B1**
(45) Date of publication and mention of the grant of the patent: **26.02.2014**
(21) Application number: 10764558.2
(22) Date of filing: 14.04.2010
(51) Int. Cl.: G06F 21/62, H04M 3/42, H04L 29/06

(54) **ANONYMOUS COMMUNICATION SYSTEM, ANONYMOUS COMMUNICATION METHOD, COMMUNICATION CONTROL DEVICE, TERMINAL DEVICE, AND COMMUNICATION CONTROL PROGRAM**
ANONYMES KOMMUNIKATIONSSYSTEM, ANONYMES KOMMUNIKATIONSVERFAHREN, KOMMUNIKATIONSSTEUERVORRICHTUNG, ENDGERÄT UND KOMMUNIKATIONSSTEUERPROGRAMM
SYSTÈME DE COMMUNICATION ANONYME, PROCÉDÉ DE COMMUNICATION ANONYME, DISPOSITIF DE COMMANDE DE COMMUNICATION, DISPOSITIF TERMINAL ET PROGRAMME DE COMMANDE DE COMMUNICATION

(30) Priority: 15.04.2009 JP 2009098619
(43) Date of publication of application: 22.02.2012
(73) Proprietor: NEC Corporation, Tokyo 108-8001 (JP)
(72) Inventor: MINAMIZAWA, Takeaki, Tokyo 108-8001 (JP)
(74) Representative: Vossius & Partner
(86) International application number: PCT/JP2010/056956
(87) International publication number: WO 2010/119976

(56) References cited:
- EP-A1- 1 429 515
- JP-A- 2003 338 813
- JP-A- 2005 135 431
- JP-A- 2005 284 598
- JP-A- 2006 072 629
- US-A1- 2008 005 264

## Description

The present invention relates to an anonymous communication system, an anonymous communication method, a communication control apparatus, a terminal apparatus and a communication control program, and, more particularly, to an anonymous communication system, an anonymous communication method, a communication control apparatus, a terminal apparatus and a communication control program which control communication according to a requirement for an anonymous property of a communication source or a communication destination.

When a user communicates with a service provider who provides a service, the user uses a user attribute (telephone number, a mail address and an identifier given to a cellular phone or an application in the cellular phone, for example) assigned at the time of a contract with a communication common carrier. However, when these user attributes are provided directly to a service provider, when the user attributes outflow due to a personal information leak trouble by a service provider or due to a malicious service provider, unsolicited commercial E-mails and nuisance calls using the provided user attributes may frequently occur.

In order to prevent an abuse of such user attribute, an anonymous communication system which gives anonymity of communication using a temporary user attribute for each communication destination has been proposed.

For example, in a communication system described in JP 2003-141042 A, according to a request from a user terminal, a mail address conversion server generates a temporally mail address corresponding to the existing mail address of the user at random. The mail address conversion server transfers a mail which has been sent using the generated temporally mail address to the existing mail address.

In an address translation system described in JP 2005-72707 A, a terminal apparatus transmits an e-mail in which information requesting conversion into a temporary mail address is given to a destination mail address. An address conversion server converts the destination mail address of the e-mail received from the terminal apparatus into the mail address of the destination, converts a source mail address into a temporary mail address and transmits the e-mail.

In the related technologies mentioned above, it is arranged such that, by anonymous communication using a temporary mail address, relation distinction of a user cannot be achieved. Here, relation distinction means, for example: in the case of an e-mail, distinction whether the source mail address is the same as that of another mail or not; in the case of a telephone call, distinction whether the source telephone number of a call (calling) is the same as that of another call or not; and, in the case of providing a service to a user by a server, distinction whether the user in one piece of access is the same as that of another piece of access. To what degree or how relation distinction can be performed (relation distinction property) depends on an anonymous property of anonymous communication applied.

However, in the related technologies mentioned above, on the occasion that anonymous communication is applied, an anonymous property which a service provider requires when providing a service to a user is not considered. Accordingly, there is a problem that anonymous communication in which relation distinction of a user is impossible is carried out to a service for which relation distinction of a user is required and, as a result, the service is not provided from a service provider, or, contrary, anonymous communication in which relation distinction of a user is possible is performed to a service for which relation distinction of a use is unnecessary and thus information for identifying a user is disclosed to a service provider more than necessary.

EP 1 429 515 A1 and US 2008/005 264 A1 disclose further technological background.

The present invention has been made in view of the above-mentioned problems, and its object is, in an anonymous communication system, to provide an anonymous communication system, an anonymous communication method, a communication control apparatus, a terminal apparatus and a communication control program which assure an anonymous property which a service provider requires and an anonymous property which a user permits. This object is achieved with the features of the claims.

An effect of the present invention is that, in an anonymous communication system, it is possible to assure an anonymous property required by a service provider and an anonymous property permitted by a user.

### Brief Description of Drawings

[Fig. 1] A block diagram showing an anonymous communication system in a first exemplary embodiment of the present invention.
[Fig. 2] A diagram showing a definition example of an anonymous level in the first exemplary embodiment of the present invention.
[Fig. 3] A diagram showing an example of service anonymous property information 611, anonymous communication ability information 511 and user-granted information 111 in the first exemplary embodiment of the present invention.
[Fig. 4] A sequence diagram showing operations of the first exemplary embodiment of the present invention.
[Fig. 5] A diagram showing an example of indication of a user terminal 200 in the first exemplary embodiment of the present invention.
[Fig. 6] A diagram showing another example of indication of the user terminal 200 in the first exemplary embodiment of the present invention.
[Fig. 7] A diagram showing yet another example of indication of the user terminal 200 in the first exemplary embodiment of the present invention.
[Fig. 8] A sequence diagram showing a characteristic structure of an anonymous communication system in the first exemplary embodiment of the present invention.
[Fig. 9] A diagram showing a structure of an anonymous communication system in a second exemplary embodiment of the present invention.
[Fig. 10] A diagram showing an example of service provider management information 621, service anonymous property information 611, anonymous communication ability information 511 and user-granted information 111 in the second exemplary embodiment of the present invention.
[Fig. 11] A sequence diagram showing operations of the second exemplary embodiment of the present invention.
[Fig. 12] A sequence diagram (continuation of Fig. 11) showing operations of the second exemplary embodiment of the present invention.
[Fig. 13] A diagram showing a structure of an anonymous communication system in a third exemplary embodiment of the present invention.
[Fig. 14] A diagram showing an example of service provider management information 621, service anonymous property information 611, anonymous communication ability information 511, user-granted information 111 and anonymous communication apparatus identifier information 141 and determined service information 151 in the third exemplary embodiment of the present invention.
[Fig. 15] A sequence diagram showing operations of the third exemplary embodiment of the present invention.
[Fig. 16] A sequence diagram (continuation of Fig. 15) showing operations of the third exemplary embodiment of the present invention.
[Fig. 17] A diagram showing a structure of an anonymous communication system in a fourth exemplary embodiment of the present invention.
[Fig. 18] A diagram showing an example of service anonymous property information 611, anonymous communication ability information 511 and user-granted information 111 in the fourth exemplary embodiment of the present invention.
[Fig. 19] A diagram showing an example of anonymous communication ability setting information 414 in the fourth exemplary embodiment of the present invention.
[Fig. 20] A sequence diagram showing operations of the fourth exemplary embodiment of the present invention.
[Fig. 21] A diagram showing a structure of an anonymous communication system in a fifth exemplary embodiment of the present invention.
[Fig. 22] A diagram showing an example of service provider management information 621, service anonymous property information 611, anonymous communication ability information 511 and user management information 131 and user-granted information 111 in the fifth exemplary embodiment of the present invention.
[Fig. 23] A sequence diagram showing operations of the fifth exemplary embodiment of the present invention.
[Fig. 24] A sequence diagram (continuation of Fig. 23) showing operations of the fifth exemplary embodiment of the present invention.
[Fig. 25] A diagram showing a structure of an anonymous communication system in a sixth exemplary embodiment of the present invention.

**Reference Signs List**
- 100: Communication control apparatus
- 110: User-granted information memory unit
- 111: User-granted information
- 120: Communication control unit
- 130: User management information memory unit
- 131: User management information
- 140: Anonymous communication apparatus identifier information memory unit
- 141: Anonymous communication apparatus identifier information
- 150: Determined service information memory unit
- 151: Determined service information
- 200: User terminal
- 210: Browser
- 220: Telephone application
- 230: Mail client
- 300: Service apparatus
- 310: WWW server
- 320: Telephone application
- 330: Mail client
- 400: Anonymous communication apparatus
- 410: Anonymous communication apparatus
- 411: Anonymous communication unit
- 412: Anonymous communication ability setting unit
- 413: Anonymous communication ability setting information memory unit
- 414: Anonymous communication ability setting information
- 420: Anonymous communication apparatus
- 421: Anonymous communication unit
- 430: Anonymous communication apparatus
- 431: Anonymous communication unit
- 500: Anonymous communication ability management apparatus
- 510: Anonymous communication ability information memory unit
- 511: Anonymous communication ability information
- 600: Service anonymous property management apparatus
- 610: Service anonymous property information memory unit
- 611: Service anonymous property information
- 620: Service provider management information memory unit
- 621: Service provider management information
- 711: Message
- 712: Confirmation button
- 713: Message
- 714: Confirmation button
- 715: Message
- 716: Confirmation button
- 717: Confirmation button
- 718: Check box

### Description of Embodiments

### (First exemplary embodiment)

Next, a first exemplary embodiment of the present invention will be described in detail with reference to drawings.

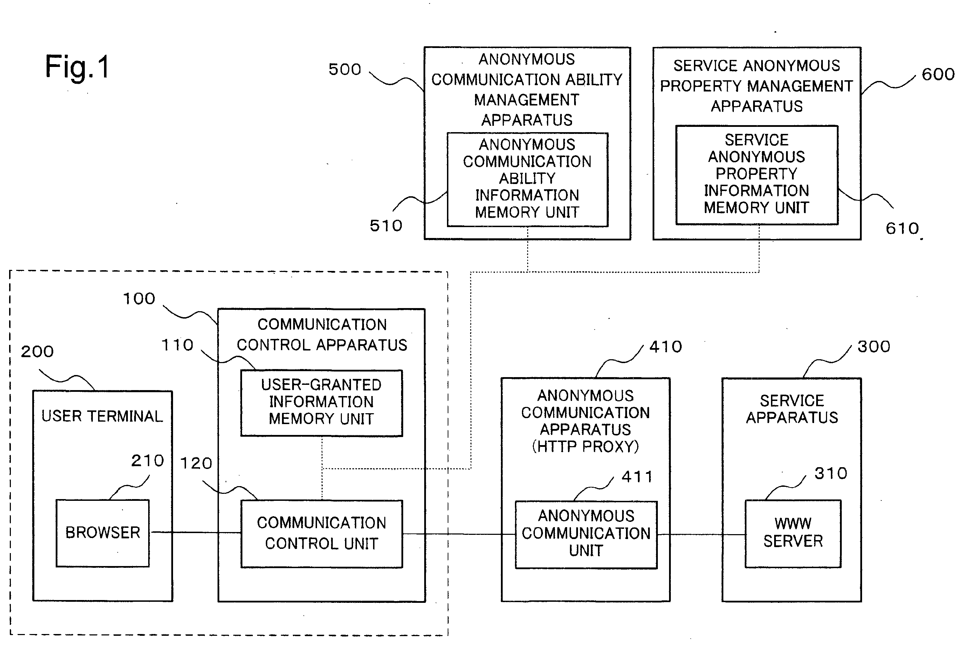

Fig. 1 is a block diagram of an anonymous communication system in the first exemplary embodiment of the present invention. Referring to Fig. 1, the first exemplary embodiment of an anonymous communication system of the present invention includes a communication control apparatus 100, a user terminal 200, a service apparatus 300, an anonymous communication apparatus (HTTP (Hypertext Transfer Protocol) proxy) 410, an anonymous communication ability management apparatus 500 and a service anonymous property management apparatus 600. Here, the communication control apparatus 100, the service apparatus 300, the anonymous communication apparatus 410, the anonymous communication ability management apparatus 500 and the service anonymous property management apparatus 600 are installed on a network (not shown) such as the Internet and a NGN (Next Generation Network). A network and connection of each apparatus with the network may be of a wired system or of a radio system.

Here, for example, the communication control apparatus 100 and the user terminal 200 are devices which the user possesses. The anonymous communication apparatus 410, the anonymous communication ability management apparatus 500 and the service anonymous property management apparatus 600 are apparatuses which a communication common carrier provides. Also, the service apparatus 300 is an apparatus which a service provider provides. The communication control apparatus 100 may be managed by a communication common carrier. On the contrary, a user may manage some of or all of the anonymous communication apparatus 410, the anonymous communication ability management apparatus 500 and the service anonymous property management apparatus 600.

Also, some of the communication control apparatus 100, the user terminal 200, the service apparatus 300, the anonymous communication apparatus 410, the anonymous communication ability management apparatus 500 and the service anonymous property management apparatus 600 may be composed as one apparatus. For example, the communication control apparatus 100 and the user terminal 200 may be composed as one terminal apparatus. Also, the communication control apparatus 100, the anonymous communication ability management apparatus 500 and the service anonymous property management apparatus 600 may be composed as one control apparatus.

The communication control apparatus 100 controls access from the user terminal 200 to the service apparatus 300 based on an anonymous property required from the service apparatus 300, an anonymous property of anonymous communication which can be carried out by the anonymous communication apparatus 410 and an anonymous property permitted by a user.

Here, an anonymous property is information which shows, when performing anonymous communication, to what degree or how a sender or a receiver who performs communication can identify a partner. In the first exemplary embodiment of the present invention, an anonymous property is expressed in a level of anonymity (anonymous level) given to a providing method of a user attribute. It is supposed that the larger the numerical value of an anonymous level is, the more anonymity is increased (the relation distinction property of a user is decreased). Here, a user attribute is identity (characteristics and conditions) by which a user can be identified. In the first exemplary embodiment of the present invention, an identifier of a user that is given to an HTTP request by a browser 210 (HTTP user identifier) is a user attribute.

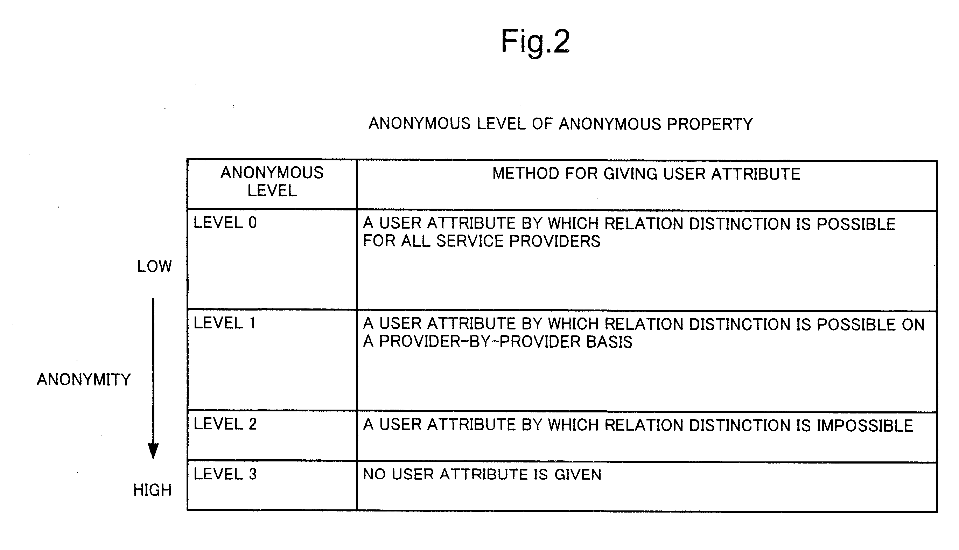

In Fig. 2, a definition example of an anonymous level in the first exemplary embodiment of the present invention is shown. When an anonymous level is "level 0", a user attribute by which relation distinction of a user is possible for all service providers is provided to a service provider. That is, a same user attribute value is used for every service provider. For example, an i-mode ID used in i-mode (registered trademark) of a cellular phone corresponds to this. When an anonymous level is "level 1", a user attribute by which relation distinction of a user is possible on a provider-by-provider basis is provided to a service provider. That is, by a user attribute, although an identical user can be recognized within one service provider, an identical user cannot be distinguished between different service providers. For example, a temporary ID of ID-FF (Identity Federation Framework) formulated in the standardization group Liberty Alliance corresponds to this. When an anonymous level is "level 2", a user attribute by which relation distinction of a user is impossible is provided to a service provider. That is, whenever a service is accessed from the user terminal 200, a new user attribute is provided to a service provider, and an identical user cannot be distinguished even by the identical service provider. For example, an identifier generally referred to as an "one-time ID" corresponds to this. When an anonymous level is "level 3 ", a user attribute is not provided to a service provider. Accordingly, a service provider cannot identify a user.

The communication control apparatus 100 includes a user-granted information memory unit 110 and a communication control unit 120. The communication control apparatus 100 may be an information processing apparatus which operates by program control. The user-granted information memory unit 110 performs memorization management of user-granted information 111. The user-granted information 111 indicates an anonymous property which a user permits in communication between the user terminal 200 and the service apparatus 300.

The communication control unit 120 performs control of access from the user terminal 200 to the service apparatus 300 via the anonymous communication apparatus 410 (control of open and close of communication) based on a service anonymous property information 611, an anonymous communication ability information 511 and the user-granted information 111.

The user terminal 200 is an information processing terminal such as a PC and a cellular phone for a user to access the service apparatus 300. The user terminal 200 accesses the service apparatus 300 via the communication control apparatus 100. The user terminal 200 includes a browser 210 as a communication application processing unit. The browser 210 is an application which acquires content such as a home page from a WWW (World Wide Web) server 310 of the service apparatus 300 using HTTP protocol, and indicates it.

The service apparatus 300 is an information processing apparatus such as a server machine or of cloud computing for a service provider providing a service. The service apparatus 300 includes the WWW server 310. The WWW server 310 provides content such as a home page in response to a request from the browser 210 of the user terminal 200.

The anonymous communication apparatus 410 provides anonymous communication for communication by HTTP protocol between the user terminal 200 and the service apparatus 300. The anonymous communication apparatus 410 includes an anonymous communication unit 411.

The anonymous communication unit 411, in addition to the function of a general HTTP proxy, converts a user attribute (here, HTTP user identifier) which has been given to an HTTP request received from the browser 210 into an anonymous user attribute according to the anonymous property of anonymous communication which the anonymous communication apparatus 410 carries out, and transmits it to the WWW server 310. Note that, the function of a general HTTP proxy is such as a data cache and filtering processing for securing safe communication, the both being provided in an HTTP proxy installed between a network in an enterprise and the Internet, for example.

The anonymous communication ability management apparatus 500 includes an anonymous communication ability information memory unit 510. The anonymous communication ability information memory unit 510 performs memorization management of the anonymous communication ability information 511 that indicates the anonymous property of anonymous communication which the anonymous communication apparatus 410 can carry out.

The service anonymous property management apparatus 600 includes a service anonymous property information memory unit 610. The service anonymous property information memory unit 610 performs memorization management of the service anonymous property information 611. The service anonymous property information 611 indicates an anonymous property that a service provider requires when the service provider provides a service to the user terminal 200 by the service apparatus 300.

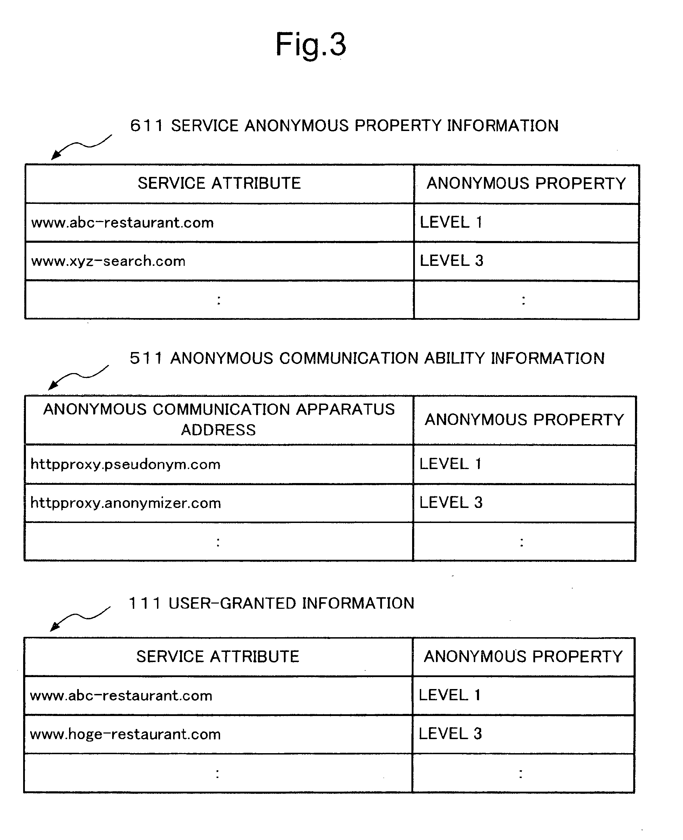

In Fig. 3, examples of the service anonymous property information 611, the anonymous communication ability information 511 and the user-granted information 111 in the first exemplary embodiment of the present invention are shown.

The service anonymous property information 611 includes a service attribute and a condition of an anonymous property (the maximum value of an anonymous level) required by the service apparatus 300 for a service of the service attribute. The anonymous communication ability information 511 includes an anonymous communication apparatus address and the anonymous property of anonymous communication which the anonymous communication apparatus 410 having the anonymous communication apparatus address can carry out. The user-granted information 111 includes a service attribute and a condition of an anonymous property (the minimum value of an anonymous level) permitted by a user to communication performed in a service of the service attribute.

Here, a service attribute is identity (characteristics or conditions) by which a service can be identified. In the first exemplary embodiment of the present invention, the server domain name of the WWW server 310 is used as the service attribute.

Note that, the user-granted information memory unit 110, the anonymous communication ability memory unit 510 and the service anonymous property information memory unit 610 may be realized by RDBMS (Relational DataBase Management System) or the like, for example.

It is supposed that the service anonymous property information 611 held by the service anonymous property information memory unit 610 and the anonymous communication ability information 511 held by the anonymous communication ability information memory unit 510 are set in advance by a communication common carrier, for example. It is also supposed that the user-granted information 111 held by the user-granted information memory unit 110 is set in advance by a user, for example.

Next, operations of the first exemplary embodiment of the present invention will be described with reference to drawings.

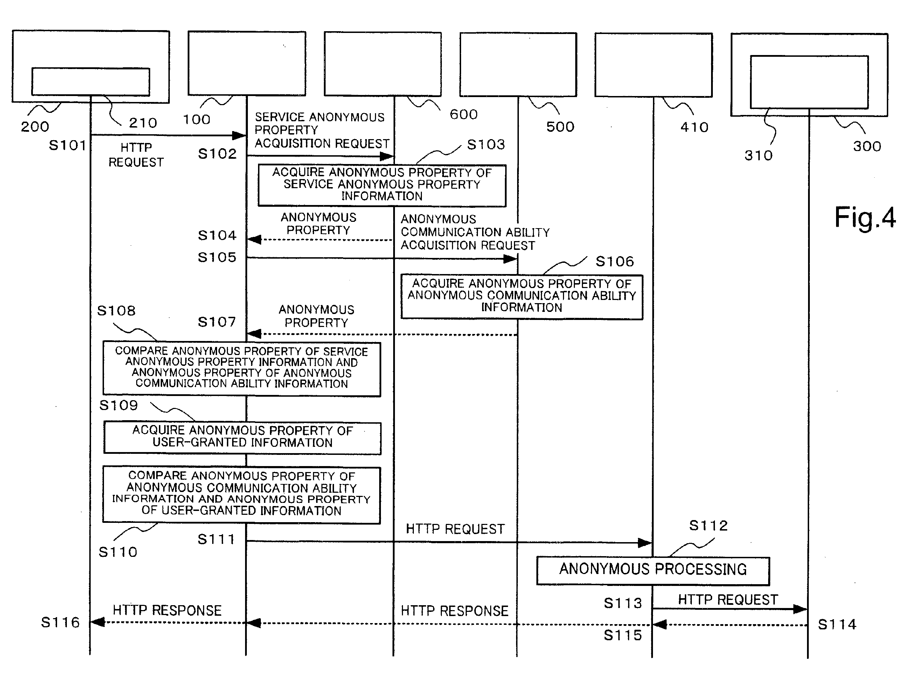

Fig. 4 is a sequence diagram showing operations of the first exemplary embodiment of the present invention.

In the first exemplary embodiment of the present invention, it is supposed that a user accesses the WWW server 310 of the service apparatus 300 from the browser 210 of the user terminal 200. It is also supposed that setting has been made to the browser 210 such that, when an HTTP request is transmitted, it is transmitted via the anonymous communication apparatus 410.

First, a user operates the browser 210 of the user terminal 200 and requests acquisition of the home page of the WWW server 310 of the service apparatus 300. The browser 210 transmits a communication request (HTTP request) to the communication control apparatus 100 (Step S101). Here, it is supposed that an HTTP request includes a destination URL including a service attribute, the anonymous communication apparatus address of the anonymous communication apparatus 410 that carries out anonymous communication, and an HTTP user identifier as a user attribute.

For example, the browser 210 transmits an HTTP request including the destination URL "http://www.abc-restaurant.co.jp/booking_service.html", the anonymous communication apparatus address "httpproxy.pseudonym.com", and the HTTP user identifier "user0001 ", to the communication control apparatus 100. The HTTP user identifier is given as X-USER-ID of HTTP extended header, for example.

The communication control unit 120 of the communication control apparatus 100 that has received the HTTP request acquires the service attribute from the destination URL included in the HTTP request, and transmits a service anonymous property information acquisition request including the service attribute to the service anonymous property management apparatus 600 (Step S102).

For example, the communication control unit 120 acquires the server domain name "www.abc-restaurant.co.jp" as a service attribute from the destination URL "http://www.abc-restaurant.co.jp/booking_service.html", and transmits a service anonymous property information acquisition request.

The service anonymous property management apparatus 600 refers to the service anonymous property information 611 of the service anonymous property information memory unit 610, acquires an anonymous property using the service attribute as a retrieval key, and sends back it to the communication control apparatus 100 (Steps S103 and S104).

For example, the service anonymous property management apparatus 600 refers to the service anonymous property information 61 1 of Fig. 3, acquires "level 1" as an anonymous property corresponding to the server domain name "www.abc-restaurant.co.jp" which is a service attribute and sends back it to the communication control apparatus 100.

Next, the communication control unit 120 of the communication control apparatus 100 transmits an anonymous communication ability acquisition request including the anonymous communication apparatus address added to the HTTP request to the anonymous communication ability management apparatus 500 (Step S105). The anonymous communication ability management apparatus 500 refers to the anonymous communication ability information 511 of the anonymous communication ability memory unit 510, acquires an anonymous property using the anonymous communication apparatus address as a retrieval key, and sends back it to the communication control apparatus 100 (Steps S106 and S107).

For example, the communication control unit 120 transmits an anonymous communication ability acquisition request including an anonymous communication apparatus address "httpproxy.pseudonym.com" to the anonymous communication ability management apparatus 500. The anonymous communication ability management apparatus 500 refers to the anonymous communication ability information 511 of Fig. 3, acquires "level 1" as an anonymous property corresponding to the anonymous communication apparatus address "httpproxy.pseudonym.com", and sends back it to the communication control apparatus 100.

Next, the communication control unit 120 of the communication control apparatus 100 compares the anonymous level of the anonymous property of the service anonymous property information 611 acquired from the service anonymous property management apparatus 600 and the anonymous level of the anonymous property of the anonymous communication ability information 511 acquired from the anonymous communication ability management apparatus 500, and determines whether the anonymous property of the anonymous communication apparatus 410 meets the anonymous property required by the service apparatus 300 (Step S108).

Here, when the anonymous level of the anonymous property of the service anonymous property information 611 is smaller than the anonymous level of the anonymous property of the anonymous communication ability information 511, the anonymous property of the anonymous communication apparatus 410 does not meet the anonymous property which the service apparatus 300 requests. That is, the service apparatus 300 cannot perform identification of a user required in order to provide a service to the user. In this case, the communication control unit 120 responds to the browser 210 with a communication refusal. Here, the user terminal 200 may indicate a message showing that communication has been refused.

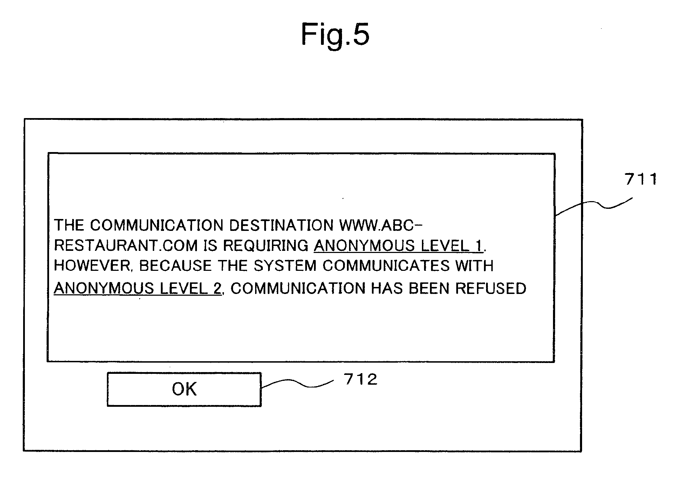

For example, as shown in Fig. 5, the user terminal 200 may indicate a message 711 showing that communication has been refused because the anonymous property of the anonymous communication apparatus 410 does not meet the anonymous property required by the service apparatus 300 along with a confirmation button 712.

As an example in which the anonymous property of the anonymous communication apparatus 410 does not meet the anonymous property required by the service apparatus 300, there is the following example. For example, when the service is a seat reservation service of a restaurant, the service apparatus 300 needs to know that a plurality of pieces of access by a user have been made at different time points by the identical user by an anonymous property of level 0 or level 1. However, when the anonymous communication apparatus 410 can perform control only with an anonymous property of level 2 or level 3, the service apparatus 300 cannot recognize that a plurality of pieces of access by a user have been made at different time points by the identical user. Accordingly, the service apparatus 300 cannot provide the reservation service.

On the other hand, when the anonymous level of the anonymous property of the service anonymous property information 611 is larger than or equal to the anonymous level of the anonymous property of the anonymous communication ability information 511, the anonymous property of the anonymous communication apparatus 410 meets the anonymous property which the service apparatus 300 requires. That is, the service apparatus 300 can perform identification of a user required in order to provide a service to the user.

For example, in the above-mentioned example, because the anonymous level of the anonymous property of the service anonymous property information 611 ("level 1") is equal to the anonymous level of the anonymous property of the anonymous communication ability information 511 ("level 1"), the anonymous property of the anonymous communication apparatus 410 meets the anonymous property required by the service apparatus 300.

When the anonymous property of the anonymous communication apparatus 410 meets the anonymous property required by the service apparatus 300, the communication control unit 120 further refers to the user-granted information 111 of the user-granted information memory unit 110, and acquires an anonymous property using the service attribute as a retrieval key (Step S109).

For example, the communication control unit 120 refers to the user-granted information 111 of Fig. 3, and acquires "level 1" as an anonymous property for the server domain name "www.abc-restaurant.co.jp" which is a service attribute.

Next, the communication control unit 120 compares the anonymous level of the anonymous property of the anonymous communication ability information 511 acquired from the anonymous communication ability management apparatus 500 and the anonymous level of the anonymous property of the user-granted information 111 acquired from the user-granted information memory unit 110, and determines whether the anonymous property of the anonymous communication apparatus 410 meets the anonymous property permitted by the user (Step S 110).

When the communication control unit 120 fails to acquire the anonymous property of the user-granted information 111 or the anonymous level of the anonymous property of the anonymous communication ability information 511 is smaller than the anonymous level of the anonymous property of the user-granted information 111, the anonymous property of the anonymous communication apparatus 410 does not meet the anonymous property which the user permits. In this case, the communication control unit 120 responds to the browser 210 with a communication refusal. Here, the user terminal 200 may indicate a message showing that communication has been refused.

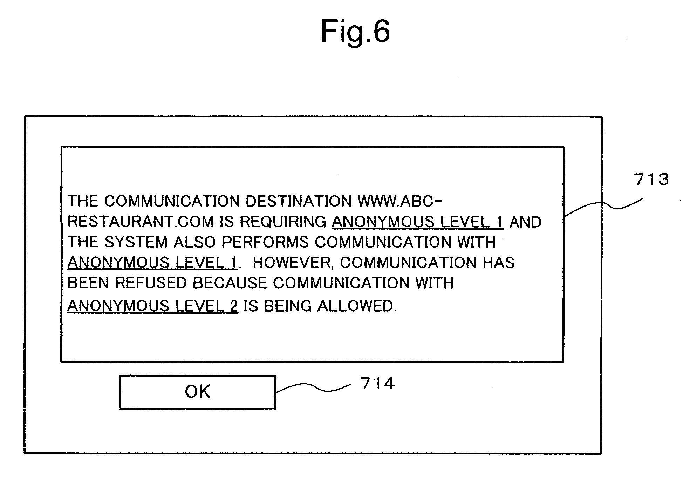

For example, as shown in Fig. 6, the user terminal 200 may indicate a message 713 showing that communication has been refused because the anonymous property of the anonymous communication apparatus 410 does not meet the anonymous property permitted by the user along with a confirmation button 714.

On the other hand, when the communication control unit 120 succeeds in acquiring the anonymous property of the user-granted information 111 and, at the same time, the anonymous level of the anonymous property of the anonymous communication ability information 511 is larger than or equal to the anonymous level of the anonymous property of the user-granted information 111, the anonymous property of the anonymous communication apparatus 410 meets the anonymous property which the user permits.

For example, in the above-mentioned example, because the anonymous level of the anonymous property of the anonymous communication ability information 511 ("level 1") is equal to the anonymous level of the anonymous property of the user-granted information 111 ("level 1"), the anonymous property of the anonymous communication apparatus 410 meets the anonymous property which the user permits.

When the anonymous property of the anonymous communication apparatus 410 meets the anonymous property which the user permits, the communication control unit 120 transmits an HTTP request to the anonymous communication apparatus 410 (Step S111).

Note that, when the communication control unit 120 cannot acquire the anonymous property of the user-granted information 111 (when there is no anonymous property in the user-granted information 111 for a service attribute that has been searched for), the user terminal 200 indicates a message for confirming whether the user permits communication or not, and when permission by the user is inputted, the communication control unit 120 may transmit an HTTP request to the anonymous communication apparatus 410.

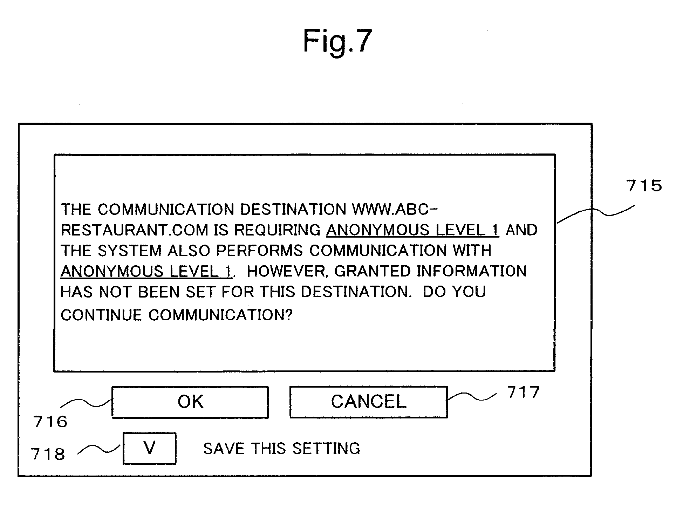

For example, as shown in Fig. 7, the user terminal 200 may indicate a message 715 for confirming whether communication by the anonymous property of the anonymous communication apparatus 410 is consented to or not along with confirmation buttons 716 and 717. Also as shown in Fig. 7, the user terminal 200 may indicate, along with the message 715, a check box 718 for confirming with a user whether to hold an anonymous property which has been consented to in the user-granted information 111.

When the HTTP request is received, the anonymous communication unit 411 of the anonymous communication apparatus 410 performs anonymous processing (conversion of a user attribute (here, HTTP user identifier)) according to the anonymous property of anonymous communication carried out by the anonymous communication apparatus 410, and transmits the HTTP request to the WWW server 310 of the service apparatus 300 (Steps S112 and S113).

For example, in the above-mentioned example, because the anonymous property of anonymous communication carried out by the anonymous communication apparatus 410 (anonymous property of the anonymous communication ability information 511) is "level 1", the anonymous communication unit 411 converts an HTTP user identifier "user0001 given to the HTTP request as a user attribute into an HTTP user identifier "user85964458" which is an anonymous user attribute and which is different for each service provider, and transmits it to the WWW server 310.

Note that, when the anonymous property of anonymous communication which the anonymous communication apparatus 410 carries out is "level 0", the anonymous communication unit 411 gives a same HTTP user identifier (for example, HTTP user identifier "user0001"given by the browser 210) for all service providers. When the anonymous property of anonymous communication which the anonymous communication apparatus 410 carries out is "level 2", the anonymous communication unit 411 gives a different HTTP user identifier for each HTTP request. When the anonymous property of anonymous communication which the anonymous communication apparatus 410 carries out is "level 3", the anonymous communication unit 411 does not give an HTTP user identifier to an HTTP request.

The WWW server 310 sends back content such as a home page corresponding to the URL to the user terminal 200 via the anonymous communication apparatus 410 (Steps S114 to S116).

By this, the operations of the first exemplary embodiment of the present invention are completed.

Note that, in the first exemplary embodiment of the present invention, although an anonymous communication apparatus address which is the identifier of an anonymous communication apparatus is given to a communication request (HTTP request), and the communication control apparatus 100 performs, for the anonymous communication apparatus with the identifier included in the HTTP request, acquisition of an anonymous property and transfer of a communication request, the communication control apparatus 100 may hold the identifier of an anonymous communication apparatus used for each communication means and, when receiving a communication request from the user terminal 200, acquire an anonymous communication apparatus corresponding to a communication means.

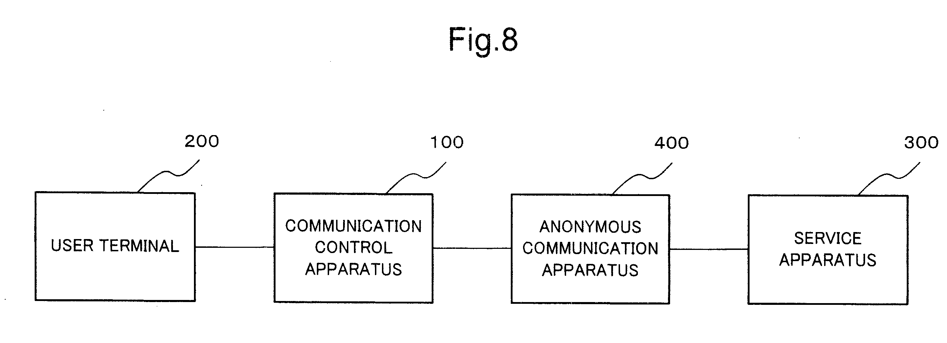

Next, a characteristic structure of an anonymous communication system in the first exemplary embodiment of the present invention is shown in Fig. 8. Referring to Fig. 8, an anonymous communication system includes the user terminal 200, the service apparatus 300, the anonymous communication apparatus 400 which provides anonymous communication between the user terminal 200 and the service apparatus 300, and the communication control apparatus 100 that controls access from the user terminal 200 to the service apparatus 300 via the anonymous communication apparatus 400. Here, based on the service anonymous property information 611 that indicates an anonymous property for a user required by a service provider in a service provided with the service apparatus 300, the anonymous communication ability information 511 that indicates the anonymous property of anonymous communication which the anonymous communication apparatus 400 is able to carry out and the user-granted information 111 that indicates an anonymous property for the user permitted by the user in communication between the user terminal 200 and the service apparatus 300, the communication control apparatus 100 controls access from the user terminal 200 to the service apparatus 300 via the anonymous communication apparatus 400.

According to the first exemplary embodiment of the present invention, in an anonymous communication system, an anonymous property which a service provider requires and an anonymous property which a user permits can be assured. The reason of this is that, based on the service anonymous property information 611 that indicates an anonymous property for a user required when the service apparatus 300 provides a service, the anonymous communication ability information 511 that indicates the anonymous property of anonymous communication which the anonymous communication apparatus 400 can carry out and the user-granted information 111 that indicates an anonymous property permitted by the user in communication between the user terminal 200 and the service apparatus 300, the communication control apparatus 100 controls access from the user terminal 200 to the service apparatus 300 via the anonymous communication apparatus 410 (controls open and close of communication).

Also, according to the first exemplary embodiment of the present invention, in an anonymous communication system, a user can receive the full benefit of a service provided by a service provider with an easy mind. The reason is that, due to access control (open and close control of communication) based on the service anonymous property information 611, the anonymous communication ability information 511 and the user-granted information 111, there are no cases that information exceeding an anonymous property permitted by a user is transmitted to a service provider.

According to the first exemplary embodiment of the present invention, in an anonymous communication system, a service provider can acquire more users. The reason is that, by disclosing to a user information required by a service provider at the time of providing a service as the service anonymous property information 611, it becomes easy for the user to participate in the service.

Further, according to the first exemplary embodiment of the present invention, access control (open and close control of communication) can be performed in the side of a terminal which begins communication (which transmits a communication request) before communication on a network begins. The reason is that the communication control apparatus 100 performs access control taking a communication request from the user terminal 200 as an trigger of the access control.

### (Second exemplary embodiment)

Next, a second exemplary embodiment of the present invention will be described in detail with reference to drawings.

In the second exemplary embodiment of the present invention, it is arranged such that, when the user terminal 200 receives services using a plurality of communication means of different kinds between the user terminal 200 and the service apparatus 300, an anonymous property for an identical service provider can be assured to be identical.

The second exemplary embodiment of the present invention is different from the first exemplary embodiment of the present invention in the point that an anonymous property of the service anonymous property information 611 and the user-granted information 111 is managed as an anonymous property for the identifier of a service provider, not as a service attribute.

Note that, in the second exemplary embodiment of the present invention, unless otherwise noted, it is supposed that a component having a reference sign identical with a component of the first exemplary embodiment of the present invention is identical with the component of the first exemplary embodiment of the present invention.

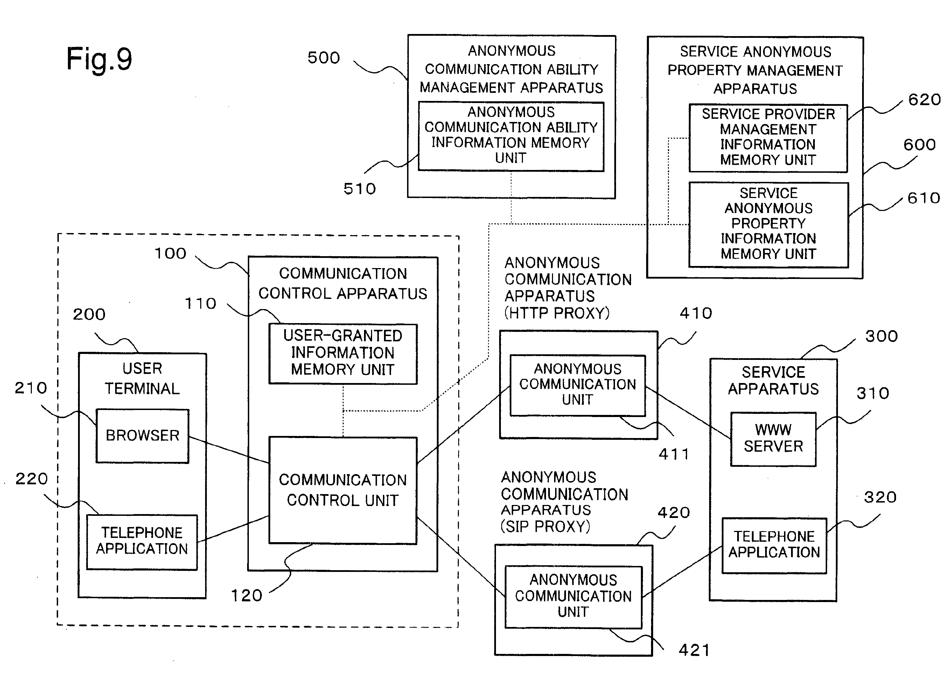

Fig. 9 is a diagram showing a structure of an anonymous communication system in the second exemplary embodiment of the present invention.

Referring to Fig. 9, the second exemplary embodiment of an anonymous communication system of the present invention includes an anonymous communication apparatus (SIP (Session Initiation Protocol) proxy) 420 in addition to the structure of the first exemplary embodiment of the present invention. The user terminal 200 has a telephone application 220 as the communication application processing unit in addition to the browser 210. The service apparatus 300 has a telephone application 320 in addition to the WWW server 310.

In the second exemplary embodiment of the present invention, the server domain name of the WWW server 310 and the telephone number of the telephone application 320 are used as service attributes. Further, in the second exemplary embodiment of the present invention, an HTTP user identifier which the browser 210 gives to an HTTP request and a caller telephone number which the telephone application 220 gives to a call start request are used as user attributes.

The telephone application 220 of the user terminal 200 connects with the telephone application 320 of the service apparatus 300 via an anonymous communication apparatus 420 using SIP protocol, and performs voice communication.

The anonymous communication apparatus 420 provides anonymous communication for communication between the user terminal 200 and the service apparatus 300 by SIP protocol. The anonymous communication apparatus 420 includes an anonymous communication unit 421.

The anonymous communication unit 421, in addition to functions of a general SIP proxy, converts a user attribute (here, telephone number) given to a call start request from the telephone application 220 of the user terminal 200 into an anonymous user attribute according to the anonymous property of anonymous communication which the anonymous communication apparatus 420 carries out, and transmits it to the telephone application 320 of the service apparatus 300.

The service anonymous property management apparatus 600 has a service provider management information memory unit 620 in addition to the service anonymous property information memory unit 610. The service provider management information memory unit 620 performs memorization management of service provider management information 621 that indicates a corresponding relationship between the identifier of a service provider (service provider ID) and a service attribute.

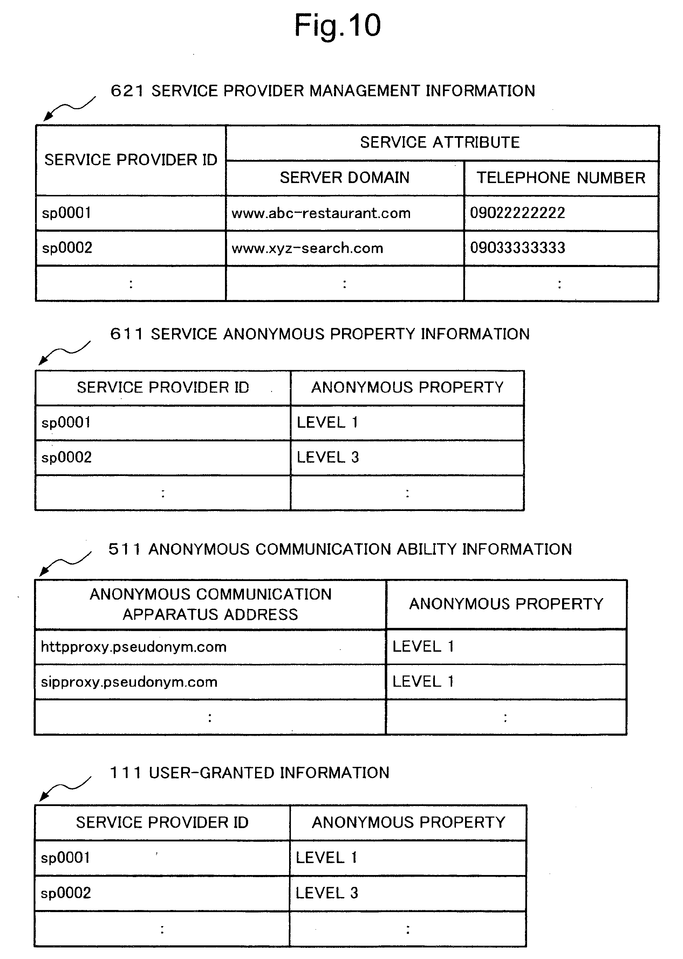

In Fig. 10, an example of the service provider management information 621, the service anonymous property information 611, the anonymous communication ability information 511 and the user-granted information 111 in the second exemplary embodiment of the present invention are shown.

The service provider management information 621 includes a service provider ID and a service attribute of a service provided by the service provider (here, the server domain name of the WWW server 310 and the telephone number of the telephone application 320). Note that, the service attribute of the service provider management information 621 may further include other kinds of service attributes (a mail address of the service provider, for example). Further, the service attribute of the service provider management information 621 may include more than one same kind of service attributes (a plurality of server domain names, for example). The service anonymous property information 611 includes a service provider ID and a condition of an anonymous property which the service apparatus 300 requires to a service of the service provider. The user-granted information 111 includes a service provider ID and a condition of an anonymous property which a user permits in communication with the service provider.

It is supposed that the service provider management information 621 held by the service provider management information memory unit 620 and the service anonymous property information 611 held by the service anonymous property information memory unit 610 is set by a communication common carrier, for example, in advance.

Next, operations of the second exemplary embodiment of the present invention will be described with reference to a drawing.

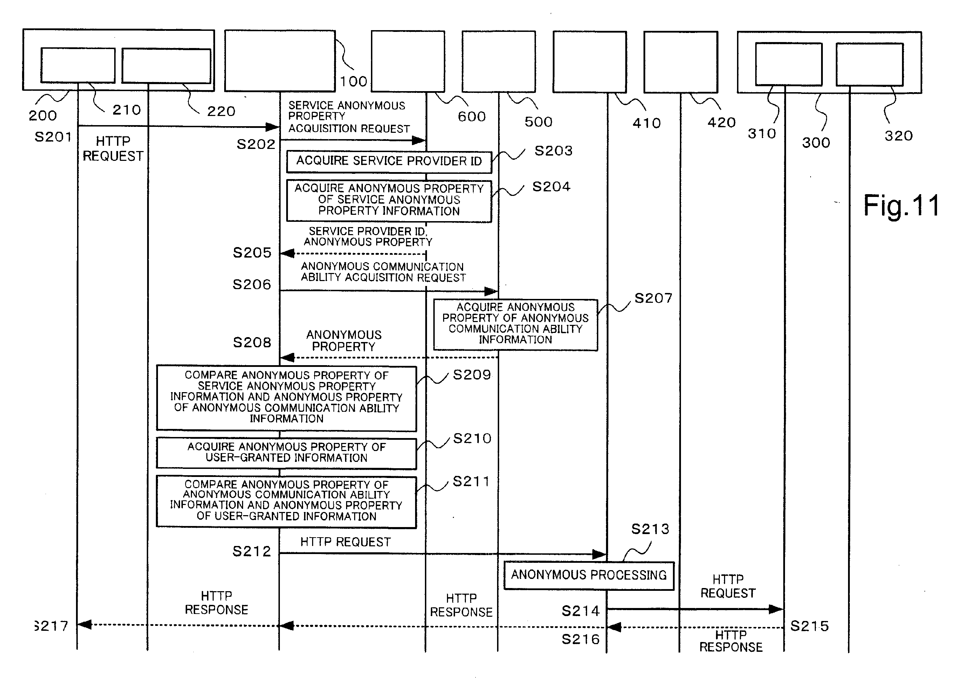

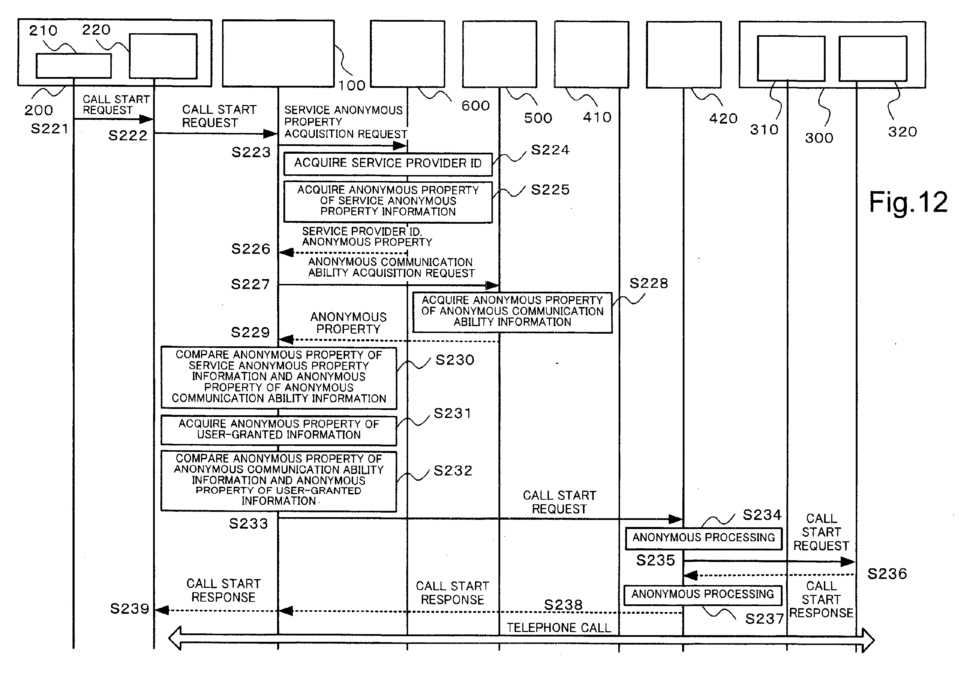

Fig. 11 and Fig. 12 are sequence diagrams showing operations of the second exemplary embodiment of the present invention.

In the second exemplary embodiment of the present invention, just like the first exemplary embodiment of the present invention, it is supposed that a user accesses the WWW server 310 of the service apparatus 300 from the browser 210 of the user terminal 200. It is supposed that a setting to go through the anonymous communication apparatus 410 has been made to the browser 210.

It is also supposed that, in the second exemplary embodiment of the present invention, telephone number of the telephone application 320 of the service apparatus 300 is described in content which the browser 210 has acquired from the WWW server 310 of the service apparatus 300. It is supposed that a user requests start of a call by designating this telephone number, and the call is performed between the telephone application 220 of the user terminal 200 and the telephone application 320 of the service apparatus 300. It is supposed that a setting to go through the anonymous communication apparatus 420 has been made to the telephone application 220.

First, a user operates the browser 210 of the user terminal 200 and requests acquisition of the home page of the WWW server 310 of the service apparatus 300. The browser 210 transmits a communication request (HTTP request) to the communication control apparatus 100 (Step S201). Here, it is supposed that an HTTP request includes a destination URL including a service attribute, the anonymous communication apparatus address of the anonymous communication apparatus 410 that carries out anonymous communication, and an HTTP user identifier as a user attribute.

For example, the browser 210 transmits an HTTP request including a destination URL "http://www.abc-restaurant.co.jp/booking_service.html", an anonymous communication apparatus address "httpproxy.pseudonym.com", and an HTTP user identifier "user0001" to the communication control apparatus 100.

The communication control unit 120 of the communication control apparatus 100 that has received the HTTP request acquires the service attribute from the destination URL included in the HTTP request, and transmits a service anonymous property information acquisition request including the service attribute to the service anonymous property management apparatus 600 (Step S202).

For example, the communication control unit 120 acquires the server domain name "www.abc-restaurant.co.jp" as a service attribute from the destination URL "http://www.abc-restaurant.co.jp/booking_service.html", and transmits a service anonymous property information acquisition request.

The service anonymous property management apparatus 600 refers to the service provider management information 621 of the service provider management information memory unit 620, and acquires a service provider ID using the service attribute as a retrieval key (Step S203). The service anonymous property management apparatus 600 refers to the service anonymous property information 611 of the service anonymous property information memory unit 610, and acquires an anonymous property using the acquired service provider ID as a retrieval key (Step S204). The service anonymous property management apparatus 600 sends back the service provider ID and the anonymous property which have been acquired to the communication control apparatus 100 (Step S205).

For example, the service anonymous property management apparatus 600 acquires "sp0001" as a service provider ID corresponding to the server domain name "www.abc-restaurant.co.jp" which is a service attribute with reference to the service provider management information 621 of Fig. 10. The service anonymous property management apparatus 600 refers to the service anonymous property information 611, and acquires "level 1" as an anonymous property corresponding to the service provider ID "sp0001 ", and sends back it to the communication control apparatus 100.

Next, the communication control unit 120 of the communication control apparatus 100 transmits an anonymous communication ability acquisition request including the anonymous communication apparatus address added to the HTTP request to the anonymous communication ability management apparatus 500 (Step S206). The anonymous communication ability management apparatus 500 refers to the anonymous communication ability information 511 of the anonymous communication ability memory unit 510, acquires an anonymous property using the anonymous communication apparatus address as a retrieval key, and sends back it to the communication control apparatus 100 (Steps S207 and S208).

For example, the communication control unit 120 transmits an anonymous communication ability acquisition request including an anonymous communication apparatus address "httpproxy.pseudonym.com" to the anonymous communication ability management apparatus 500. The anonymous communication ability management apparatus 500 refers to the anonymous communication ability information 511 of Fig. 10, acquires "level 1" as an anonymous property corresponding to the anonymous communication apparatus address "httpproxy.pseudonym.com", and sends back it to the communication control apparatus 100.

Next, the communication control unit 120 of the communication control apparatus 100 compares the anonymous level of the anonymous property of the service anonymous property information 611 acquired from the service anonymous property management apparatus 600 and the anonymous level of the anonymous property of the anonymous communication ability information 511 acquired from the anonymous communication ability management apparatus 500, and determines whether the anonymous property of the anonymous communication apparatus 410 meets the anonymous property required by the service apparatus 300 (Step S209).

When the anonymous level of the anonymous property of the service anonymous property information 611 is larger than or equal to the anonymous level of the anonymous property of the anonymous communication ability information 511, the anonymous property of the anonymous communication apparatus 410 meets the anonymous property which the service apparatus 300 requests.

For example, in the above-mentioned example, because the anonymous level of the anonymous property of the service anonymous property information 611 ("level 1") is equal to the anonymous level of the anonymous property of the anonymous communication ability information 511 ("level 1"), the anonymous property of the anonymous communication apparatus 410 meets the anonymous property which the service apparatus 300 requests.

When the anonymous property of the anonymous communication apparatus 410 meets the anonymous property required by the service apparatus 300, the communication control unit 120 further refers to the user-granted information 111 of the user-granted information memory unit 110, and acquires an anonymous property using the service provider ID as a retrieval key (Step S210).

For example, the communication control unit 120 acquires "level 1" as an anonymous property for the service provider ID "sp0001" with reference to the user-granted information 111 of Fig. 10.

Next, the communication control unit 120 compares the anonymous level of the anonymous property of the anonymous communication ability information 511 acquired from the anonymous communication ability management apparatus 500 and the anonymous level of the anonymous property of the user-granted information 111 acquired from the user-granted information memory unit 110, and determines whether the anonymous property of the anonymous communication apparatus 410 meets the anonymous property permitted by the user (Step S211).

When the communication control unit 120 succeeds in acquiring the anonymous property of the user-granted information 111 and, at the same time, the anonymous level of the anonymous property of the anonymous communication ability information 511 is larger than or equal to the anonymous level of the anonymous property of the user-granted information 111, the anonymous property of the anonymous communication apparatus 410 meets the anonymous property which the user permits.

For example, in the above-mentioned example, because the anonymous level of the anonymous property of the anonymous communication ability information 511 ("level 1") is equal to the anonymous level of the anonymous property of the user-granted information 111 ("level 1"), the anonymous property of the anonymous communication apparatus 410 meets the anonymous property which the user permits.

When the anonymous property of the anonymous communication apparatus 410 meets the anonymous property which the user permits, the communication control unit 120 transmits the HTTP request to the anonymous communication apparatus 410 (Step S212).

When the HTTP request is received, the anonymous communication unit 411 of the anonymous communication apparatus 410 performs anonymous processing (conversion of a user attribute (here, HTTP user identifier)) according to the anonymous property of anonymous communication carried out by the anonymous communication apparatus 410, and transmits the HTTP request to the WWW server 310 of the service apparatus 300 (Steps S213 and S214).

For example, in the above-mentioned example, because the anonymous property of anonymous communication carried out by the anonymous communication apparatus 410 (anonymous property of the anonymous communication ability information 511) is "level 1", the anonymous communication unit 411 converts an HTTP user identifier "user0001" given to the HTTP request as a user attribute into an HTTP user identifier "user58428844" which is an anonymous user attribute and which is different for each service provider, and transmits the HTTP request to the WWW server 310.

The WWW server 310 sends back content such as a home page corresponding to the URL to the user terminal 200 via the anonymous communication apparatus 410 (Steps S215 to S217).

Next, the user selects the telephone number described in the content sent back from the WWW server 310 of the service apparatus 300, and requests start of a call with the service apparatus 300. For example, selection of a telephone number by a user is performed by clicking telephone number by a mouse in the case of a PC, and by selecting telephone number by a cursor in the case of a cellular phone.

The browser 210 issues a communication request (call start request) to the telephone application 220 (Step S221).

The telephone application 220 transmits the call start request to the communication control apparatus 100 (Step S222). Here, it is supposed that a destination telephone number, a source telephone number and an anonymous communication apparatus address of the anonymous communication apparatus 420 that carries out anonymous communication are included in the call start request.

For example, when a destination telephone number "09022222222" described in content is selected, the telephone application 220 transmits a call start request including the destination telephone number "09022222222", a source telephone number "09011111111" and an anonymous communication apparatus address "sipproxy.pseudonym.com" to the communication control apparatus 100. A call start request is an INVITE message of SIP protocol, for example, and destination telephone number and source telephone number are given as SIP-URI.

The communication control unit 120 of the communication control apparatus 100 that has received the call start request uses the destination telephone number included in the call start request as a service attribute, and transmits a service anonymous property information acquisition request including the service attribute to the service anonymous property management apparatus 600 (Step S223).

For example, the communication control unit 120 transmits a service anonymous property information acquisition request using a destination telephone number "09022222222"as a service attribute.

The service anonymous property management apparatus 600 refers to the service provider management information 621 of the service provider management information memory unit 620, and acquires a service provider ID using the service attribute as a retrieval key (Step S224). The service anonymous property management apparatus 600 refers to the service anonymous property information 611 of the service anonymous property information memory unit 610, and acquires an anonymous property using the acquired service provider ID as a retrieval key (Step S225). The service anonymous property management apparatus 600 sends back the service provider ID and the anonymous property which have been acquired to the communication control apparatus 100 (Step S226).

For example, the service anonymous property management apparatus 600 acquires "sp0001" as a service provider ID corresponding to the destination telephone number "09022222222" which is a service attribute with reference to the service provider management information 621 of Fig. 10. The service anonymous property management apparatus 600 refers to the service anonymous property information 611, and acquires "level 1" as an anonymous property corresponding to the service provider ID "sp0001", and sends back it to the communication control apparatus 100.

Next, the communication control unit 120 of the communication control apparatus 100 transmits an anonymous communication ability acquisition request including the anonymous communication apparatus address added to the call start request to the anonymous communication ability management apparatus 500 (Step S227). The anonymous communication ability management apparatus 500 refers to the anonymous communication ability information 511 of the anonymous communication ability memory unit 510, acquires an anonymous property using the anonymous communication apparatus address as a retrieval key, and sends back it to the communication control apparatus 100 (Steps S228 and S229).

For example, the communication control unit 120 transmits an anonymous communication ability acquisition request including an anonymous communication apparatus address "sipproxy.pseudonym.com" to the anonymous communication ability management apparatus 500. The anonymous communication ability management apparatus 500 acquires "level 1" as an anonymous property corresponding to the anonymous communication apparatus address "sipproxy.pseudonym.com" with reference to the anonymous communication ability information 511 of Fig. 10, and sends back it the communication control apparatus 100.

Next, the communication control unit 120 of the communication control apparatus 100 compares the anonymous level of the anonymous property of the service anonymous property information 611 acquired from the service anonymous property management apparatus 600 and the anonymous level of the anonymous property of the anonymous communication ability information 511 acquired from the anonymous communication ability management apparatus 500, and determines whether the anonymous property of the anonymous communication apparatus 420 meets the anonymous property required by the service apparatus 300 (Step S230).

When the anonymous level of the anonymous property of the service anonymous property information 611 is larger than or equal to the anonymous level of the anonymous property of the anonymous communication ability information 511, the anonymous property of the anonymous communication apparatus 420 meets the anonymous property which the service apparatus 300 requests.

For example, in the above-mentioned example, because the anonymous level of the anonymous property of the service anonymous property information 611 ("level 1") is equal to the anonymous level of the anonymous property of the anonymous communication ability information 511 ("level 1"), the anonymous property of the anonymous communication apparatus 420 meets the anonymous property which the service apparatus 300 requests.

When the anonymous property of the anonymous communication apparatus 410 meets the anonymous property required by the service apparatus 300, the communication control unit 120 further refers to the user-granted information 111 of the user-granted information memory unit 110, and acquires an anonymous property using the service provider ID as a retrieval key (Step S231).

For example, the communication control unit 120 acquires "level 1" as an anonymous property for the service provider ID "sp0001" with reference to the user-granted information 111 of Fig. 10.

Next, the communication control unit 120 compares the anonymous level of the anonymous property of the anonymous communication ability information 511 acquired from the anonymous communication ability management apparatus 500 and the anonymous level of the anonymous property of the user-granted information 111 acquired from the user-granted information memory unit 110, and determines whether the anonymous property of the anonymous communication apparatus 420 meets the anonymous property permitted by the user (Step S232).

When the communication control unit 120 succeeds in acquiring the anonymous property of the user-granted information 111 and, at the same time, the anonymous level of the anonymous property of the anonymous communication ability information 511 is larger than or equal to the anonymous level of the anonymous property of the user-granted information 111, the anonymous property of the anonymous communication apparatus 420 meets the anonymous property which the user permits.

For example, in the above-mentioned example, because the anonymous level of the anonymous property of the anonymous communication ability information 511 ("level 1") is equal to the anonymous level of the anonymous property of the user-granted information 111 ("level I "), the anonymous property of the anonymous communication apparatus 420 meets the anonymous property which the user permits.

When the anonymous property of the anonymous communication apparatus 420 meets the anonymous property which the user permits, the communication control unit 120 transmits the call start request to the anonymous communication apparatus 420 (Step S233).

When the call start request is received, the anonymous communication unit 421 of the anonymous communication apparatus 420 performs anonymous processing (conversion of a user attribute (here, source telephone number)) according to the anonymous property of anonymous communication which the anonymous communication apparatus 420 carries out, and transmits the call start request to the telephone application 320 of the service apparatus 300 (Steps S234 and S235).

For example, in the above-mentioned example, because the anonymous property of anonymous communication carried out by the anonymous communication apparatus 420 (anonymous property of the anonymous communication ability information 511) is "level 1", the anonymous communication unit 421 converts the source telephone number "09011111111" given to the call start request (INVITE message) as a user attribute into source telephone number "05084558244" which is an anonymous user attribute and which is different for each service provider, and transmits the call start request to the WWW server 310.

Note that, when the anonymous property of anonymous communication which the anonymous communication apparatus 420 carries out is "level 0", the anonymous communication unit 421 gives same source telephone number (source telephone number given by the telephone application 220) for all service providers. When the anonymous property of anonymous communication which the anonymous communication apparatus 420 carries out is "level 2", the anonymous communication unit 421 gives different source telephone number for each call start request. When the anonymous property of anonymous communication which the anonymous communication apparatus 420 carries out is "level 3", the anonymous communication unit 421 does not give source telephone number to the call start request.

When the service provider picks a receiver of the service apparatus 300 up, the telephone application 320 transmits a call start response to the anonymous communication apparatus 420 (Step S236).

When the call start response is received, the anonymous communication unit 421 of the anonymous communication apparatus 420 performs anonymous processing (here, processing for converting the source telephone number into telephone number given by the telephone application 220 as source telephone number) according to the anonymous property of anonymous communication which the anonymous communication apparatus 420 carries out, and transmits the call start response to the telephone application 220 of the user terminal 200 (Steps S237 to S239).

Henceforth, a call is begun between the telephone application 220 of the user terminal 200 and the telephone application 320 of the service apparatus 300.

Note that, anonymous processing of an identifier used in a communication protocol for a call between the telephone application 220 and the telephone application 320 (anonymous processing of an IP address, for example) may be performed in connection with the anonymous processing for the above-mentioned call start request by the anonymous communication apparatus 420 or may be performed independently.

By the above, operations of the second exemplary embodiment of the present invention is completed.

According to the second exemplary embodiment of the present invention, in an anonymous communication system, when the user terminal 200 receives services using a plurality of different kinds of communication means between the user terminal 200 and the service apparatus 300, an anonymous property for an identical service provider can be assured to be identical. The reason is that an anonymous property of the service anonymous property information 611 and the user-granted information 111 is managed as an anonymous property for an identifier of a service provider, and, when the user terminal 200 accesses the service apparatus 300, the communication control apparatus 100 acquires the identifier of a service provider who provides a service and performs access control (open and close control of communication) based on the service anonymous property information 611 for the identifier of the service provider and the user-granted information 111.

Also, according to the second exemplary embodiment of the present invention, in an anonymous communication system, when the user terminal 200 receives services using different kinds of communication means between the user terminal 200 and the service apparatus 300, it is possible to prevent a user of one communication means who has performed anonymous communication from being identified as a result that the user is identified by another communication means. The reason of this is that, as mentioned above, because the communication control apparatus 100 performs access control (open and close control of communication) based on the service anonymous property information 611 and the user-granted information 111 for the identifier of a service provider, even when receiving services of an identical service provider using different communication means, an anonymous property in each communication means can be assured to be identical.

### (Third exemplary embodiment)

Next, a third exemplary embodiment of the present invention will be described in detail with reference to drawings.

In the third exemplary embodiment of the present invention, it is arranged such that, when the user terminal 200 receives services using a plurality of communication means of different kinds between the user terminal 200 and the service apparatus 300, communication is performed only when an anonymous property can be assured by all communication means used by a service provider.

The third exemplary embodiment of the present invention is different from the second exemplary embodiment of the present invention in the point that, when, for all communication applications, the anonymous communication ability of the anonymous communication apparatus meets the anonymous property of the service anonymous property information 611 and the anonymous property of the user-granted information 111, the communication control apparatus 100 permits access from the user terminal 200 to the service apparatus 300 via the anonymous communication apparatus.

Note that, in the third exemplary embodiment of the present invention, unless otherwise noted, it is supposed that a component having a reference sign identical with a component of the second exemplary embodiment of the present invention is identical with the component of the second exemplary embodiment of the present invention.

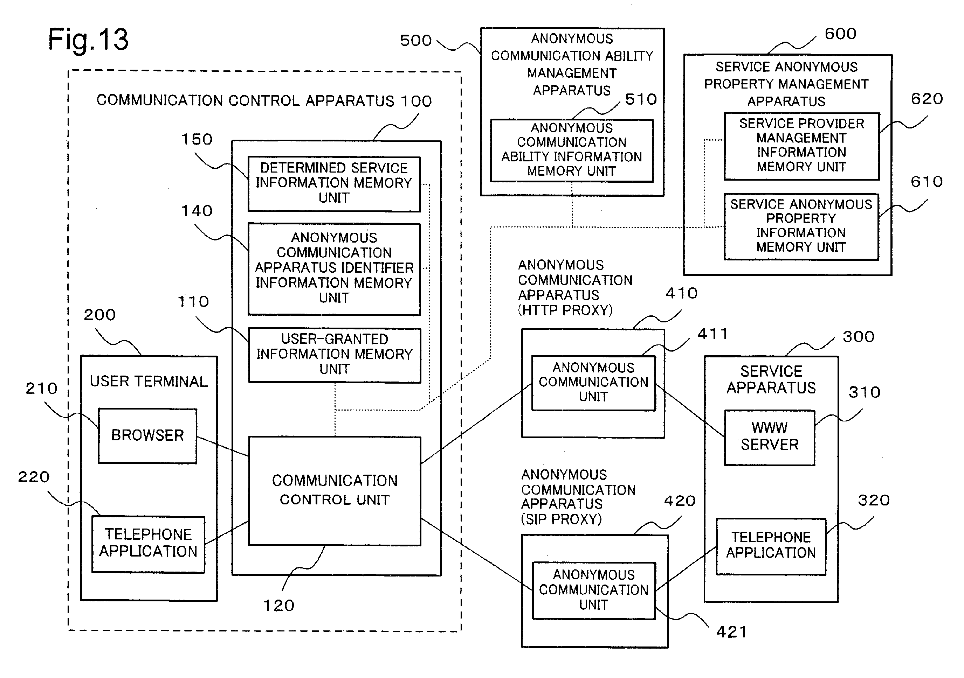

Fig. 13 is a diagram showing a structure of an anonymous communication system in the third exemplary embodiment of the present invention.

Referring to Fig. 13, in the third exemplary embodiment of an anonymous communication system of the present invention, the communication control apparatus 100 includes an anonymous communication apparatus identifier information memory unit 140 and a determined service information memory unit 150 in addition to the structure of the second exemplary embodiment of the present invention.

The anonymous communication apparatus identifier information memory unit 140 performs memorization management of the anonymous communication apparatus identifier information 141 that indicates an anonymous communication apparatus address of the anonymous communication apparatus used for each communication means. The determined service information memory unit 150 performs memorization management of the determined service information 151 that is information on a service for which it has been determined that the anonymous communication ability of the anonymous communication apparatus meets the anonymous property of the service anonymous property information 611 and the anonymous property of the user-granted information 111.

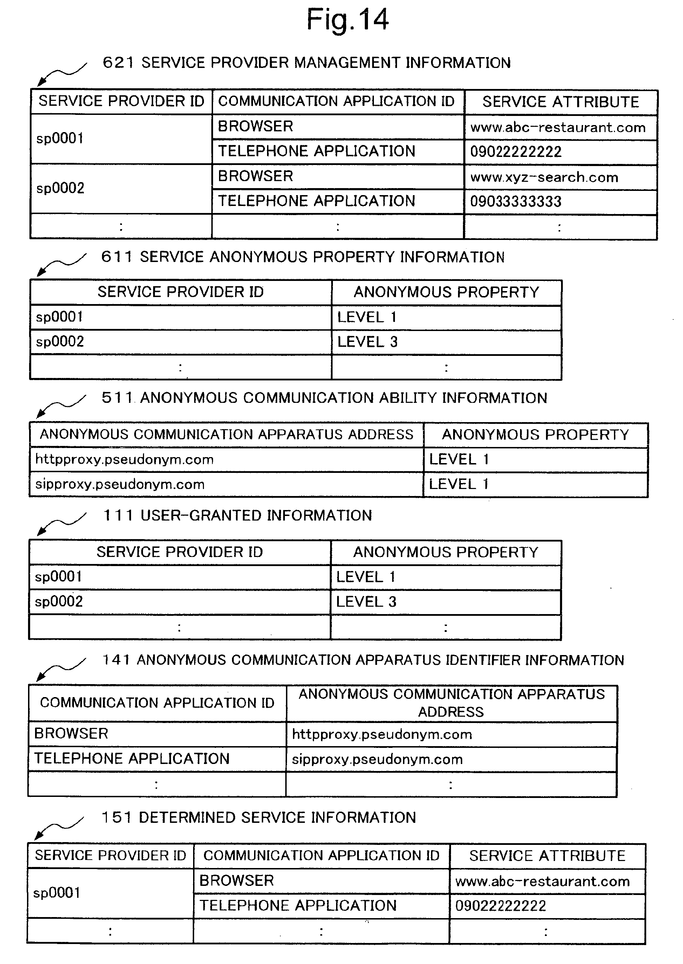

In Fig. 14, examples of the service provider management information 621, the service anonymous property information 611, the anonymous communication ability information 511, the user-granted information 111, the anonymous communication apparatus identifier information 141, and the determined service information 151 in the third exemplary embodiment of the present invention are shown.

The service provider management information 621 includes an ID of a service provider, the identifier of a communication application used by a service provided by the service provider (communication application ID), and a service attribute corresponding to the communication application (here, the server domain name of the WWW server 310 and the telephone number of the telephone application 320).

The anonymous communication apparatus identifier information 141 includes a communication application ID and an anonymous communication apparatus address of the anonymous communication apparatus used when the communication application performs communication. The determined service information 151 includes an ID of a service provider, the identifier of a communication application used by a service provided by the service provider (communication application ID), and a service attribute corresponding to the communication application.

It is supposed that the service provider management information 621 that the service provider management information memory unit 620 holds and the anonymous communication apparatus identifier information 141 that the anonymous communication apparatus identifier information memory unit 140 holds are set by a communication common carrier, for example, in advance.

Next, operations of the third exemplary embodiment of the present invention will be described with reference to drawings.

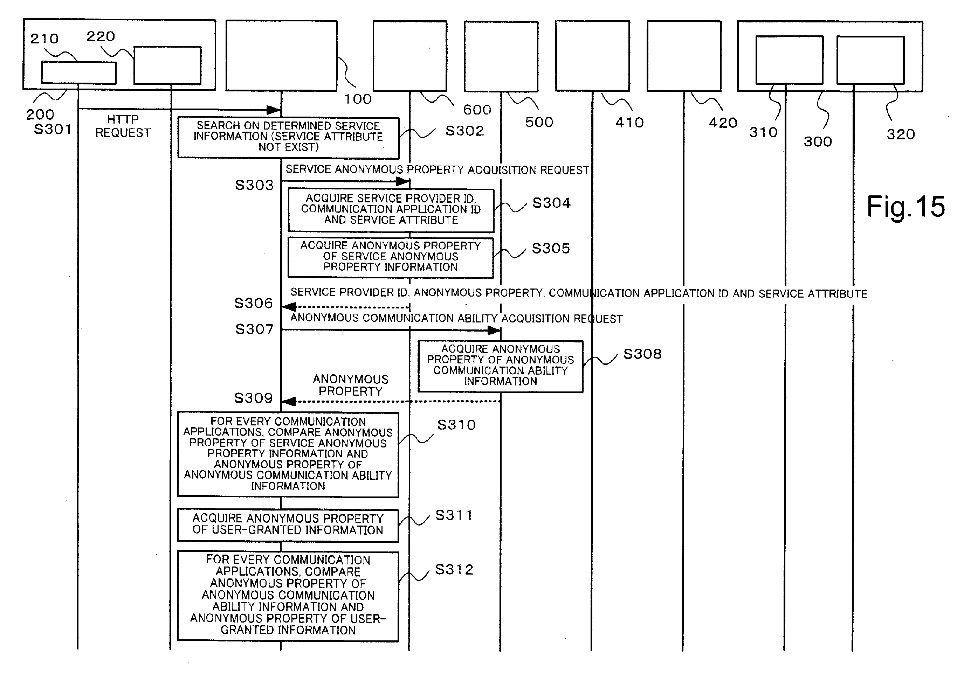

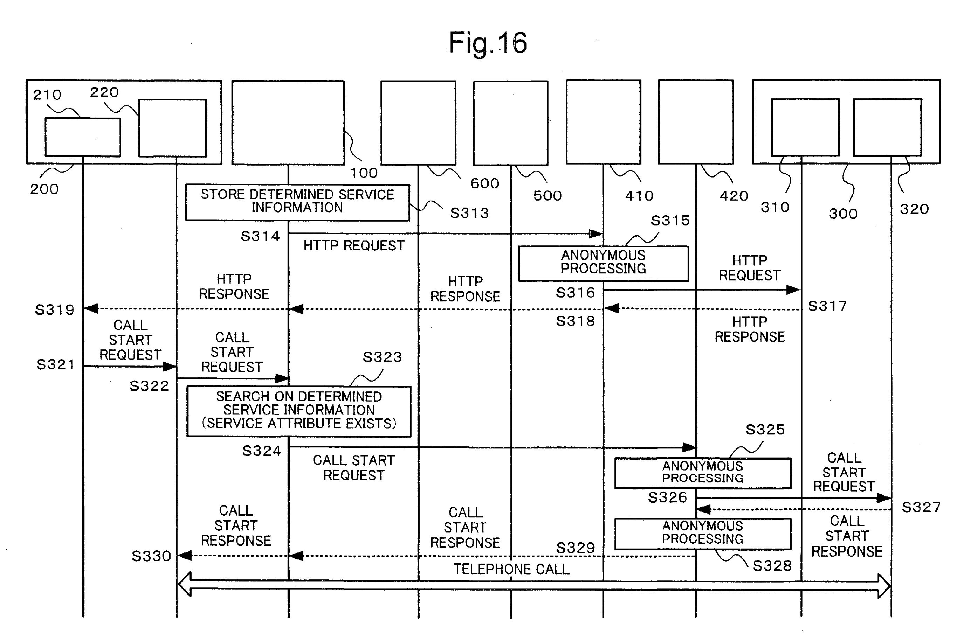

Fig. 15 and Fig. 16 are sequence diagrams showing operations of the third exemplary embodiment of the present invention.

In the third exemplary embodiment of the present invention, just like the second exemplary embodiment of the present invention, it is supposed that telephone number of the telephone application 320 of the service apparatus 300 is described in content which the browser 210 has acquired from the WWW server 310 of the service apparatus 300, and a call is performed between the user terminal 200 and the service apparatus 300 using this telephone number.

Also in the third exemplary embodiment of the present invention, it is supposed that the communication control apparatus 100 determines the anonymous communication apparatus used for anonymous communication based on the anonymous communication apparatus identifier information 141.

First, a user operates the browser 210 of the user terminal 200 and requests acquisition of the home page of the WWW server 310 of the service apparatus 300. The browser 210 transmits a communication request (HTTP request) to the communication control apparatus 100 (Step S301). Here, it is supposed that the HTTP request includes an identifier of a destination URL including a service attribute and an HTTP user identifier as a user attribute.

For example, the browser 210 transmits an HTTP request including a destination URL, "http://www.abc-restaurant.co.jp/booking_service.html" and an HTTP user identifier "user0001" to the communication control apparatus 100.

The communication control unit 120 of the communication control apparatus 100 that has received the HTTP request acquires the service attribute from the destination URL included in the HTTP request, and searches for the service attribute on the determined service information 151 (Step S302). When the service attribute does not exist in the determined service information 151, the communication control unit 120 transmits a service anonymous property information acquisition request including the service attribute to the service anonymous property management apparatus 600 (Step S303).

For example, the communication control unit 120 searches for a server domain name "www.abc-restaurant.co.jp" which is a service attribute in the determined service information 151. In the initial state, because a service attribute does not exist in the determined service information 151, the communication control unit 120 transmits a service anonymous property information acquisition request including the server domain name "www.abc-restaurant.co.jp" as a service attribute.

The service anonymous property management apparatus 600 refers to the service provider management information 621 of the service provider management information memory unit 620, acquires a service provider ID using the service attribute as a retrieval key, and, further, acquires all communication application IDs and service attributes corresponding to the service provider ID (Step S304). Also, the service anonymous property management apparatus 600 refers to the service anonymous property information 611 of the service anonymous property information memory unit 610, and acquires an anonymous property using the acquired service provider ID as a retrieval key (Step S305). The service anonymous property management apparatus 600 sends back the service provider ID, the anonymous property, the communication application IDS and the service attributes which have been acquired to the communication control apparatus 100 (Step S306).

For example, the service anonymous property management apparatus 600 acquires "sp0001" as a service provider ID corresponding to the server domain name "www.abc-restaurant.co.jp" which is a service attribute with reference to the service provider management information 621 of Fig. 14. The service anonymous property management apparatus 600 also acquires "browser" and "www.abc-restaurant.co.jp", and "telephone application" and "09022222222", as communication application IDs and service attributes corresponding to the service provider ID "sp0001". Also, the service anonymous property management apparatus 600 refers to the service anonymous property information 611 and acquires "level 1" as an anonymous property corresponding to the service provider ID "sp0001". The service anonymous property management apparatus 600 sends back the service provider ID, the anonymous property, the communication application IDs, and the service attributes to the communication control apparatus 100.

Next, the communication control unit 120 of the communication control apparatus 100 refers to the anonymous communication apparatus identifier information 141, acquires anonymous communication apparatus addresses corresponding to the communication application IDs acquired from the service anonymous property management apparatus 600, and transmits an anonymous communication ability acquisition request including the anonymous communication apparatus addresses to the anonymous communication ability management apparatus 500 (Step S307). The anonymous communication ability management apparatus 500 refers to the anonymous communication ability information 511 of the anonymous communication ability memory unit 510, acquires anonymous properties using the anonymous communication apparatus addresses as a retrieval key, and sends back them to the communication control apparatus 100 (Steps S308 and S309).

For example, the communication control unit 120 refers to the anonymous communication apparatus identifier information 141 of Fig. 14, and acquires anonymous communication apparatus addresses "httpproxy.pseudonym.com" and "sipproxy.pseudonym.com" corresponding to the communication application IDs "browser" and "telephone application". The communication control unit 120 transmits an anonymous communication ability acquisition request including these anonymous communication apparatus addresses to the anonymous communication ability management apparatus 500. The anonymous communication ability management apparatus 500 refers to the anonymous communication ability information 511 of Fig. 14, acquires an anonymous property "level 1" corresponding to the anonymous communication apparatus address "httpproxy.pseudonym.com" and an anonymous property "level 1" corresponding to the anonymous communication apparatus address "sipproxy.pseudonym.com", and sends back them to the communication control apparatus 100.

Next, for each of the communication application IDs acquired from the service anonymous property management apparatus 600, the communication control unit 120 of the communication control apparatus 100 compares the anonymous level of the anonymous property of the service anonymous property information 611 acquired from the service anonymous property management apparatus 600 and the anonymous level of the anonymous property of the anonymous communication ability information 511 acquired from the anonymous communication ability management apparatus 500, and determines whether the anonymous property of the anonymous communication apparatus meets the anonymous property required by the service apparatus 300 (Step S310). Here, when, for all communication application IDs acquired from the service anonymous property management apparatus 600, the anonymous property of the anonymous communication apparatus meets the anonymous property required by the service apparatus 300, the communication control unit 120 further refers to the user-granted information 111 of the user-granted information memory unit 110, and acquires an anonymous property using the service provider ID as a retrieval key (Step S311). When, for any one of the communication application IDs acquired from the service anonymous property management apparatus 600, the anonymous property of the anonymous communication apparatus does not meet the anonymous property required by the service apparatus 300, the communication control unit 120 replies with a communication refusal to the browser 210.

For example, in the above-mentioned example, the anonymous level of the anonymous property of the service anonymous property information 611 ("level 1") is equal to the levels of the anonymous properties for the anonymous communication apparatus addresses "httpproxy.pseudonym.com" and "sipproxy.pseudonym.com" corresponding to the communication application IDs "browser" and "telephone application" ("level 1" and "level 1", respectively) acquired from the anonymous communication ability information 511. That is, regarding all communication application IDs, the anonymous properties of the anonymous communication apparatuses 410 and 420 meet the anonymous property required by the service apparatus 300. Accordingly, the communication control unit 120 refers to the user-granted information 111 of Fig. 14, and acquires "level 1" as an anonymous property for the service provider ID "sp0001".

Next, for each of communication application IDs acquired from the service anonymous property management apparatus 600, the communication control unit 120 compares the anonymous level of the anonymous property of the anonymous communication ability information 511 acquired from the anonymous communication ability management apparatus 500 and the anonymous level of the anonymous property of the user-granted information 111 acquired from the user-granted information memory unit 110, and determines whether the anonymous property of the anonymous communication apparatus meets the anonymous property which the user permits (Step S312). Here, when, for all communication application IDs acquired from the service anonymous property management apparatus 600, the anonymous property of the anonymous communication apparatus meets the anonymous property which the user permits, the communication control unit 120 stores the service provider ID, the communication application IDs and the service attributes acquired from the service anonymous property management apparatus 600 in the determined service information 151 (S313). When, for any one of communication application IDs acquired from the service anonymous property management apparatus 600, the anonymous property of the anonymous communication apparatus does not meet the anonymous property which the user permits, the communication control unit 120 replies a communication refusal to the browser 210.

For example, in the above-mentioned example, the anonymous levels of the anonymous properties acquired from the anonymous communication ability information 511 for the anonymous communication apparatus addresses "httpproxy.pseudonym.com" and "sipproxy.pseudonym.com" corresponding to communication application IDs "browser" and "telephone application" ("level 1" and "level 1", respectively) are equal to the level of the anonymous property of the user-granted information 111 ("level 1"). That is, the anonymous properties of the anonymous communication apparatuses 410 and 420 meet the anonymous property of the anonymous property which the user permits. Accordingly, as shown in Fig. 14, the communication control unit 120 stores the service provider ID "sp0001 as well as the communication application IDs and the service attributes ("browser" and "www.abc-restaurant.co.jp", "telephone application" and "09022222222") acquired from the service anonymous property management apparatus 600 in the determined service information 151.

Next, the communication control unit 120 refers to the anonymous communication apparatus identifier information 141, acquires the anonymous communication address of the anonymous communication apparatus 410 corresponding to the communication application ID "browser", and transmits the HTTP request to the anonymous communication apparatus 410 (S314).

For example, the communication control unit 120 transmits an HTTP request to the anonymous communication apparatus 410 "httpproxy.pseudonym.com".

Hereinafter, processing after the anonymous communication apparatus 410 has performed anonymous processing until the WWW server 310 sends back content to the user terminal 200 (Steps S315 to S319) is the same as that of the second exemplary embodiment (Steps 5213 to S217) of the present invention.

Next, the browser 210 issues a communication request (a call start request) to the telephone application 220 (Step S321).

The telephone application 220 transmits the call start request to the communication control apparatus 100 (Step S322). Here, it is supposed that a call start request includes destination telephone number and source telephone number.

For example, the telephone application 220 transmits a call start request including destination telephone number "09022222222" and source telephone number "09011111111" to the communication control apparatus 100.

The communication control unit 120 of the communication control apparatus 100 that has received the call start request uses the destination telephone number included in the call start request as a service attribute, and searches for this service attribute on the determined service information 151 (Step S323). When the service attribute exists in the determined service information 151, the communication control unit 120 refers to the anonymous communication apparatus identifier information 141, acquires the anonymous communication address of the anonymous communication apparatus 420 corresponding to the communication application ID "telephone application", and transmits the call start request to the anonymous communication apparatus 420 (Step S324).

For example, the communication control unit 120 searches for the destination telephone number "09022222222" which is a service attribute in the determined service information 151. Because the destination telephone number "09022222222" exists in the determined service information 151 of Fig. 14, the communication control unit 120 transmits the call start request to the anonymous communication apparatus 420 "sipproxy.pseudonym.com".

Henceforth, processing after the anonymous communication apparatus 420 has performed anonymous processing until a call start response is transmitted to the telephone application 220 of the user terminal 200 (Steps S325 to S330) is similar to the second exemplary embodiment (Steps S234 to S239) of the present invention.

By the above, operations of the third exemplary embodiment of the present invention is completed.

According to the third exemplary embodiment of the present invention, in an anonymous communication system, when the user terminal 200 receives services using a plurality of different kinds of communication means between the user terminal 200 and the service apparatus 300, it is possible to prevent a service from being stopped by a communication means which cannot secure an anonymous property. The reason is that, when the anonymous communication ability of an anonymous communication apparatus meets the anonymous property of the service anonymous property information 611 and the anonymous property of the user-granted information 111 for all communication applications which a service provider uses for services, the communication control apparatus 100 permits access from the user terminal 200 to the service apparatus 300 via the anonymous communication apparatus.

### (Fourth exemplary embodiment)

Next, a fourth exemplary embodiment of the present invention will be described in detail with reference to drawings.

In the fourth exemplary embodiment of the present invention, when a plurality of anonymous properties can be set to an anonymous communication apparatus, an anonymous property of the anonymous communication apparatus can be set such that anonymity becomes as large as possible (a relation distinction property becomes as small as possible).

In the fourth exemplary embodiment of the present invention, the communication control apparatus 100 is different from the first exemplary embodiment of the present invention in the point that, among anonymous properties which can be set to the anonymous communication apparatus 410, one which conforms to the service anonymous property information 611 and whose anonymity is the biggest (a relation distinction property is the smallest) is selected and is set to the anonymous communication apparatus 410.

Note that, in the fourth exemplary embodiment of the present invention, unless otherwise noted, it is supposed that a component having a reference sign identical with a component of the first exemplary embodiment of the present invention is identical with the component of the first exemplary embodiment of the present invention.

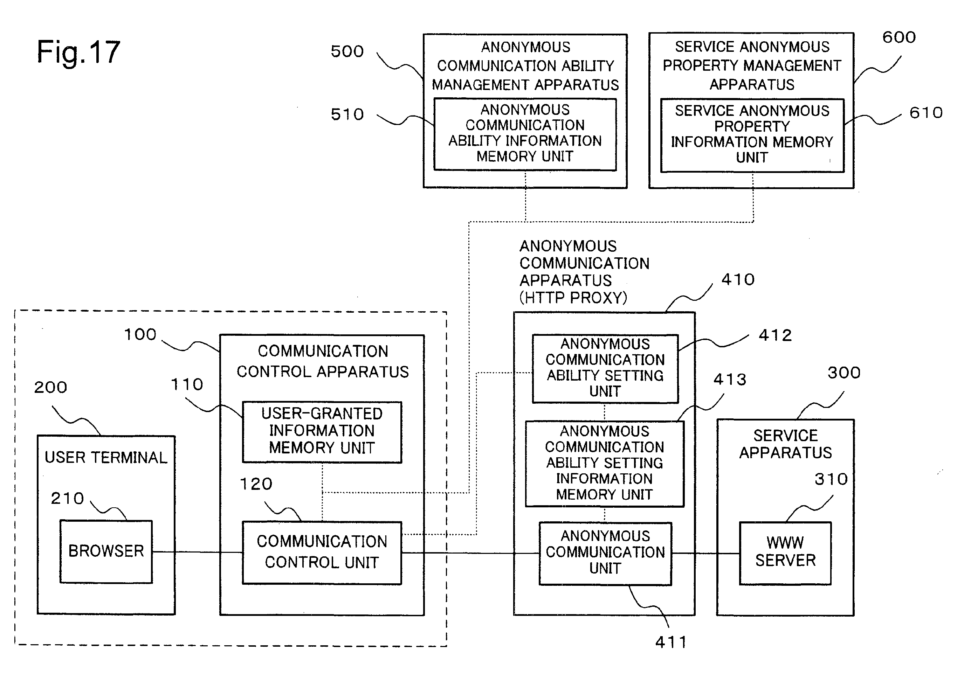

Fig. 17 is a diagram showing a structure of an anonymous communication system in the fourth exemplary embodiment of the present invention.

Referring to Fig. 17, in the fourth exemplary embodiment of an anonymous communication system of the present invention, the anonymous communication apparatus 410 includes an anonymous communication ability setting unit 412 and an anonymous communication ability setting information memory unit 413 in addition to the anonymous communication unit 411. The anonymous communication ability setting unit 412 stores an anonymous property designated by the communication control apparatus 100 in the anonymous communication ability setting information memory unit 413. The anonymous communication ability setting information memory unit 413 performs memorization management of the anonymous communication ability setting information 414 set to the anonymous communication apparatus 410.

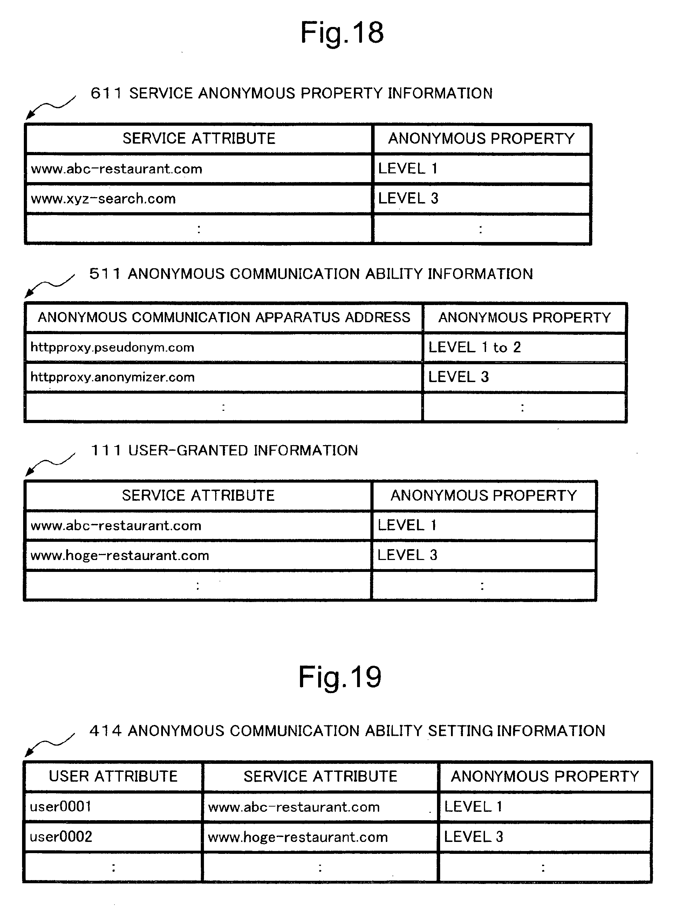

In Fig. 18, examples of the service anonymous property information 611, the anonymous communication ability information 511 and the user-granted information 111 in the fourth exemplary embodiment of the present invention are shown. According to the second exemplary embodiment of the present invention, it is supposed that an anonymous property of the anonymous communication ability information 511 is indicated by a range of an anonymous level which can be set to the anonymous communication apparatus 410. An anonymous property of the anonymous communication ability information 511 may also be indicated by a plurality of anonymous levels which can be set to the anonymous communication apparatus 410.

In Fig. 19, an example of the anonymous communication ability setting information 414 in the fourth exemplary embodiment of the present invention is shown. The anonymous communication ability setting information 414 includes a user attribute, a service attribute, and an anonymous property which the anonymous communication apparatus 410 applies to the combination of a user attribute and a service attribute.

Next, operations of the fourth exemplary embodiment of the present invention will be described with reference to drawings.

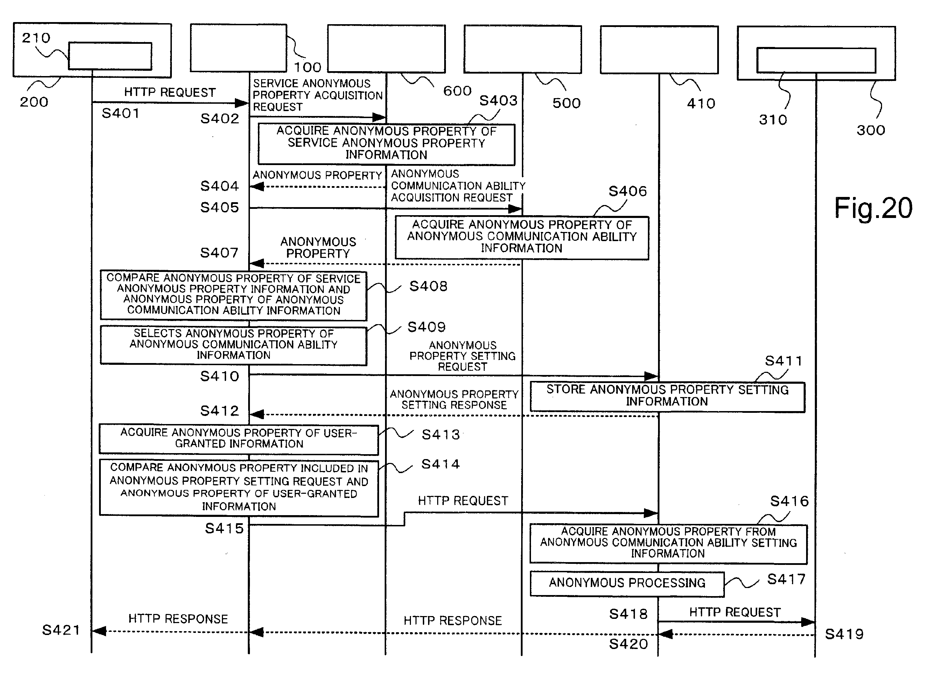

Fig. 20 is a sequence diagram showing operations of the fourth exemplary embodiment of the present invention.

In the fourth exemplary embodiment of the present invention, just like the first exemplary embodiment of the present invention, it is supposed that a user accesses the WWW server 310 of the service apparatus 300 from the browser 210 of the user terminal 200. It is supposed that a setting to go through the anonymous communication apparatus 410 has been made to the browser 210.

First, a user operates the browser 210 of the user terminal 200 and requests acquisition of the home page of the WWW server 310 of the service apparatus 300.

Operations after the browser 210 has transmitted an HTTP request to the communication control apparatus 100 until the communication control apparatus 100 acquires the service anonymous property information 611 of the service anonymous property information memory unit 610 (Steps S401 to S404) are similar to those of the first exemplary embodiment of the present invention (Steps S101 to S104).

The communication control unit 120 of the communication control apparatus 100 transmits an anonymous communication ability acquisition request including the anonymous communication apparatus address added to the HTTP request to the anonymous communication ability management apparatus 500 (Step S405). The anonymous communication ability management apparatus 500 refers to the anonymous communication ability information 511 of the anonymous communication ability memory unit 510, acquires an anonymous property using the anonymous communication apparatus address as a retrieval key, and sends back it to the communication control apparatus 100 (Steps S406 and S407).

For example, the communication control unit 120 transmits an anonymous communication ability acquisition request including an anonymous communication apparatus address "httpproxy.pseudonym.com" to the anonymous communication ability management apparatus 500. The anonymous communication ability management apparatus 500 refers to the anonymous communication ability information 511 of Fig. 18, acquires "levels 1 to 2" as an anonymous property corresponding to the anonymous communication apparatus address "httpproxy.pseudonym.com", and sends back it to the communication control apparatus 100.

Next, the communication control unit 120 of the communication control apparatus 100 compares the anonymous level of the anonymous property of the service anonymous property information 611 acquired from the service anonymous property management apparatus 600 and the anonymous level of the anonymous property of the anonymous communication ability information 511 acquired from the anonymous communication ability management apparatus 500, and determines whether the anonymous property of the anonymous communication apparatus 410 meets the anonymous property required by the service apparatus 300 (Step S408).

Here, when the anonymous level of the anonymous property of the service anonymous property information 611 is larger than or equal to any one of the numerical values included in the range of the anonymous level of the anonymous property of the anonymous communication ability information 511 ,or is larger than or equal to any one of the numerical values of a plurality of anonymous levels of the anonymous property of the anonymous communication ability information 511, the anonymous property of the anonymous communication apparatus 410 meets an anonymous property which the service apparatus 300 requires.

For example, in the above-mentioned example, because the anonymous level of the anonymous property of the service anonymous property information 611. ("level 1 ") is equal to "level 1" within the range ("levels 1 to 2") of the anonymous level of the anonymous property of the anonymous communication ability information 511, the anonymous property of the anonymous communication apparatus 410 meets the anonymous property which the service apparatus 300 requires.

When the anonymous property of the anonymous communication apparatus 410 meets the anonymous property which the service apparatus 300 requires, the communication control unit 120 selects the biggest anonymous level that satisfies the above-mentioned condition from the range of the anonymous levels or the plurality of anonymous levels of the anonymous property of the anonymous communication ability information 511 (Step S409). The communication control unit 120 transmits an anonymous property setting request including the user attribute, the service attribute, and the selected anonymous property to the anonymous communication apparatus 410 (Step S410).

For example, in the above-mentioned example, the communication control unit 120 selects "level 1" among the anonymous properties of the anonymous communication ability information 511, and transmits an anonymous property setting request including the HTTP user identifier "user0001" as a user attribute, the server domain name "abc-restaurant.com" as a service attribute, and the selected anonymous property "level 1" to the anonymous communication apparatus 410.

The anonymous communication ability setting unit 412 of the anonymous communication apparatus 410 stores the user attribute, the service attribute, and the anonymous property which are included in the received anonymous property setting request in the anonymous communication ability setting information memory unit 413 as the anonymous communication ability setting information 414 (Step S411), and replies to the communication control unit 120 (Step S412).

For example, in the above-mentioned example, as shown in Fig. 19, the anonymous communication ability setting information 414 that includes an HTTP user identifier "user0001" as a user attribute, the server domain name "abc-restaurant.com" as a service attribute and the anonymous property "level 1" are stored in the anonymous communication ability setting information memory unit 413.

The communication control unit 120 further refers to the user-granted information 111 of the user-granted information memory unit 110, and acquires an anonymous property using the service attribute as a retrieval key (Step S413).

For example, the communication control unit 120 refers to the user-granted information 111 of Fig. 18, and acquires "level 1" as an anonymous property for the server domain name "www.abc-restaurant.co.jp" which is a service attribute.

Next, the communication control unit 120 compares the anonymous level of the anonymous property included in the anonymous property setting request and the anonymous level of the anonymous property of the user-granted information 111 acquired from the user-granted information memory unit 110, and determines whether the anonymous property of the anonymous communication apparatus 410 meets the anonymous property which the user permits (Step S414).

When the communication control unit 120 succeeds in acquiring the anonymous property of the user-granted information 111 and the anonymous level of the anonymous property included in the anonymous property setting request is larger than or equal to the anonymous level of the anonymous property of the user-granted information 111, the anonymous property of the anonymous communication apparatus 410 meets the anonymous property which the user permits.

For example, in the above-mentioned example, because the anonymous level of the anonymous property included in an anonymous property setting request ("level 1") is equal to the anonymous level of the anonymous property of the user-granted information 111 ("level 1"), the anonymous property of the anonymous communication apparatus 410 meets the anonymous property which the user permits.

When the anonymous property of the anonymous communication apparatus 410 meets the anonymous property which the user permits, the communication control unit 120 transmits an HTTP request to the anonymous communication apparatus 410 (Step S415).

When the HTTP request is received, the anonymous communication unit 411 of the anonymous communication apparatus 410 refers to the anonymous communication ability setting information 414 of the anonymous communication ability setting information memory unit 413, and acquires an anonymous property using the user attribute and the service attribute which are included in the HTTP request as a retrieval key (Step S416).

For example, the anonymous communication unit 411 refers to the anonymous communication ability setting information 414 of Fig. 19, and acquires an anonymous property "level 1" using the HTTP user identifier "user0001 which is a user attribute and the server domain name "abc-restaurant.com" which is a service attribute as a retrieval key.

The anonymous communication unit 411 of the anonymous communication apparatus 410 performs anonymous processing (conversion of the user attribute (here, HTTP user identifier)) according to the acquired anonymous property, and transmits the HTTP request to the WWW server 310 of the service apparatus 300 (Steps S417 and S418).

For example, in the above-mentioned example, because the acquired anonymous property is "level 1", the anonymous communication unit 411 converts the HTTP user identifier "user0001 given to the HTTP request as a user attribute into an HTTP user identifier "user58428844" which is an anonymous user attribute and which is different for each service provider, and transmits the HTTP request to the WWW server 310.

The WWW server 310 sends back content such as a home page corresponding to the URL to the user terminal 200 via the anonymous communication apparatus 410 (Steps S419 to S421).

By this, the operation of the fourth exemplary embodiment of the present invention is completed.

According to the fourth exemplary embodiment of the present invention, in an anonymous communication system, when a plurality of anonymous properties can be set to an anonymous communication apparatus, an anonymous property of the anonymous communication apparatus can be set such that anonymity becomes as large as possible (a relation distinction property becomes as small as possible). The reason is that, among anonymous properties which can be set to the anonymous communication apparatus, the communication control apparatus 100 selects one which conforms to the service anonymous property information 611 and, at the same time, whose anonymity is the biggest (a relation distinction property is the smallest), and set it to the anonymous communication apparatus.

### (Fifth exemplary embodiment)

Next, a fifth exemplary embodiment of the present invention will be described in detail with reference to drawings.

In the fifth exemplary embodiment of the present invention, even when one user possesses a plurality of user terminals, an anonymous property can be assured.

The fifth exemplary embodiment of the present invention is different from the first and second exemplary embodiments of the present invention in the point that an anonymous property of the user-granted information 111 is managed for each user identifier of a plurality of users.

Note that, in the fifth exemplary embodiment of the present invention, unless otherwise noted, it is supposed that a component having a reference sign identical with a component of the first exemplary embodiment of the present invention is identical with the component of the first exemplary embodiment of the present invention.

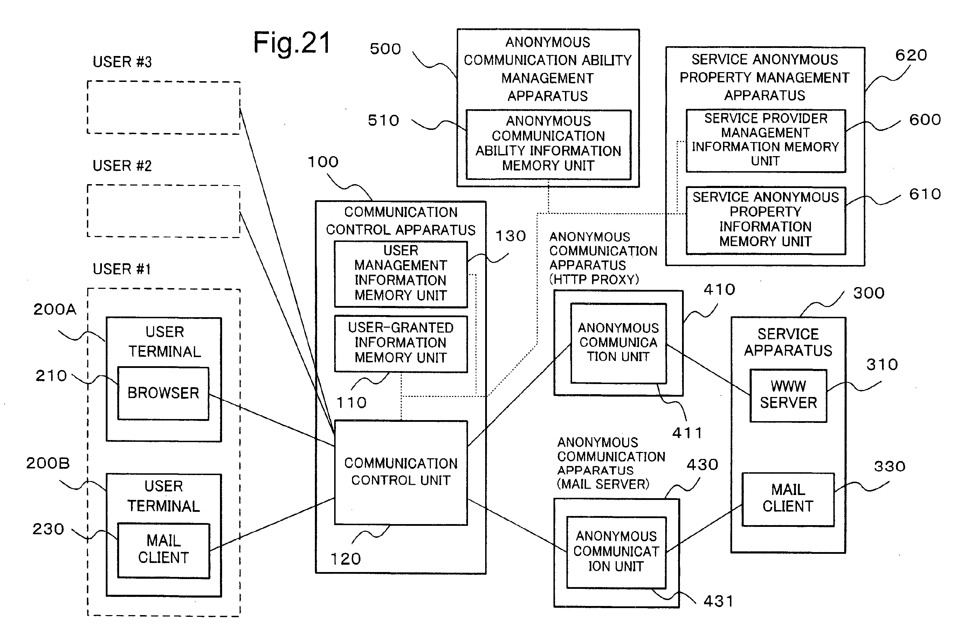

Fig. 21 is a diagram showing a structure of an anonymous communication system in the fifth exemplary embodiment of the present invention. Referring to Fig. 21, the fifth exemplary embodiment of the anonymous communication system of the present invention includes an anonymous communication apparatus (mail server) 430 in addition to the structure of the first exemplary embodiment of the present invention. The anonymous communication system of the fifth exemplary embodiment of the present invention includes a user terminal 200A and 200B possessed by an identical user as a user terminal. The user terminal 200A includes the browser 210 as a communication application processing unit. The user terminal 200B includes a mail client 230 as a communication application processing unit. The service apparatus 300 includes a mail client 330 in addition to the WWW server 310.

Here, for example, the user terminal 200 is a device which a user possesses. The communication control apparatus 100, the anonymous communication apparatus 410, the anonymous communication apparatus 430, the anonymous communication ability management apparatus 500 and the service anonymous property management apparatus 600 are apparatuses which a communication common carrier provides. The service apparatus 300 is an apparatus which a service provider provides.

According to the fifth exemplary embodiment of the present invention, the server domain name of the WWW server 310 and a mail address of a service provider are used as service attributes. In the fifth exemplary embodiment of the present invention, an HTTP user identifier which the browser 210 gives to an HTTP request and a mail address of a user given by the mail client 230 as a mail source address are used as user attributes.

The communication control apparatus 100 includes a user management information memory unit 130 in addition to the user-granted information memory unit 110 and the communication control unit 120. The user management information memory unit 130 performs memorization management of user management information 131 that indicates a corresponding relationship between a user identifier (user ID) for identifying the user uniquely and a user attribute.

The anonymous communication apparatus 430 provides anonymous communication for communication by a mail between the user terminal 200 and the service apparatus 300. The anonymous communication apparatus 430 includes an anonymous communication unit 431.

In addition to the function of a general mail server, the anonymous communication unit 431 converts a user attribute (here, a source mail address) which has been added to a mail received from the mail client 230 into an anonymous mail address according to the anonymous property of anonymous communication which the anonymous communication apparatus 430 carries out.

The service anonymous property management apparatus 600 includes a service provider management information memory unit 620 in addition to the service anonymous property information memory unit 610. The service provider management information memory unit 620 performs memorization management of the service provider management information 621 that indicates a corresponding relationship between an identifier of a service provider (service provider ID) and a service attribute.

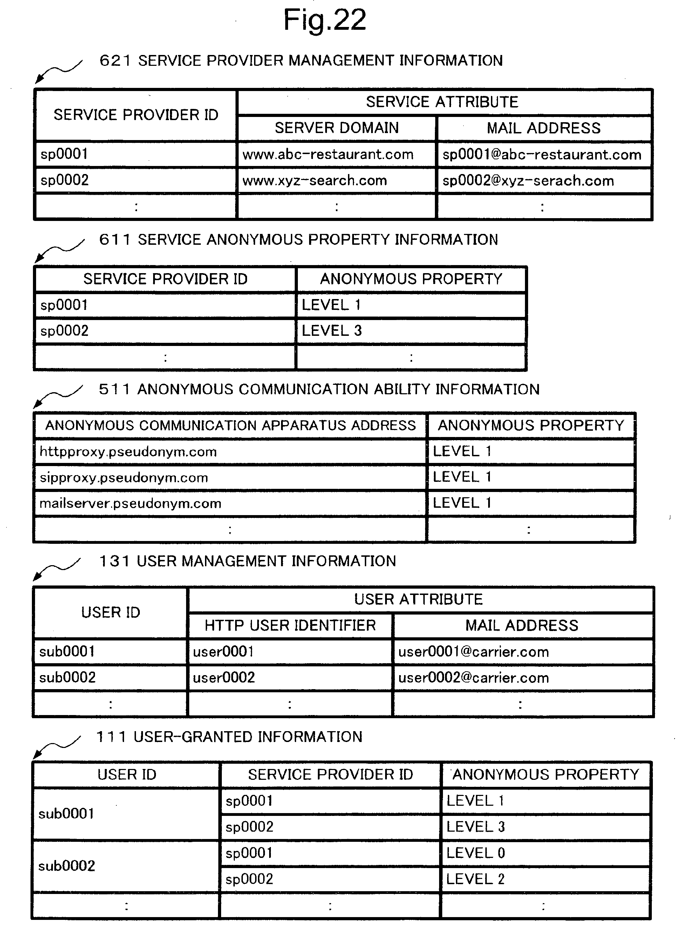

In Fig. 22, examples of the service provider management information 621, the service anonymous property information 611, the anonymous communication ability information 511, the user management information 131 and the user-granted information 111 in the fifth exemplary embodiment of the present invention are shown.

The service provider management information 621 includes a service provider ID and a service attribute of a service which the service provider provides (here, the server domain name of the WWW server 310 and the mail address of the service provider). The service anonymous property information 611 includes a service provider ID and a condition of an anonymous property which the service apparatus 300 requires to a service of the service provider.

The user management information 131 includes a user ID and a user attribute used by a user having the user ID (here, an HTTP user identifier and a mail address of the user). The user-granted information 111 is managed for each user ID of a plurality of users, and includes a service provider ID and a condition of an anonymous property that the user permits in communication with the service provider.

It is supposed that the service provider management information 621 that the service provider management information memory unit 620 holds and the service anonymous property information 611 that the service anonymous property information memory unit 610 holds are set by a communication common carrier, for example, in advance. Also, it is supposed that the user management information 131 that the user management information memory unit 130 holds and the user-granted information 111 that the user-granted information memory unit 110 holds are set by a communication common carrier based on information acquired from the user, for example, in advance.

Next, operations of the fifth exemplary embodiment of the present invention will be described with reference to drawings.

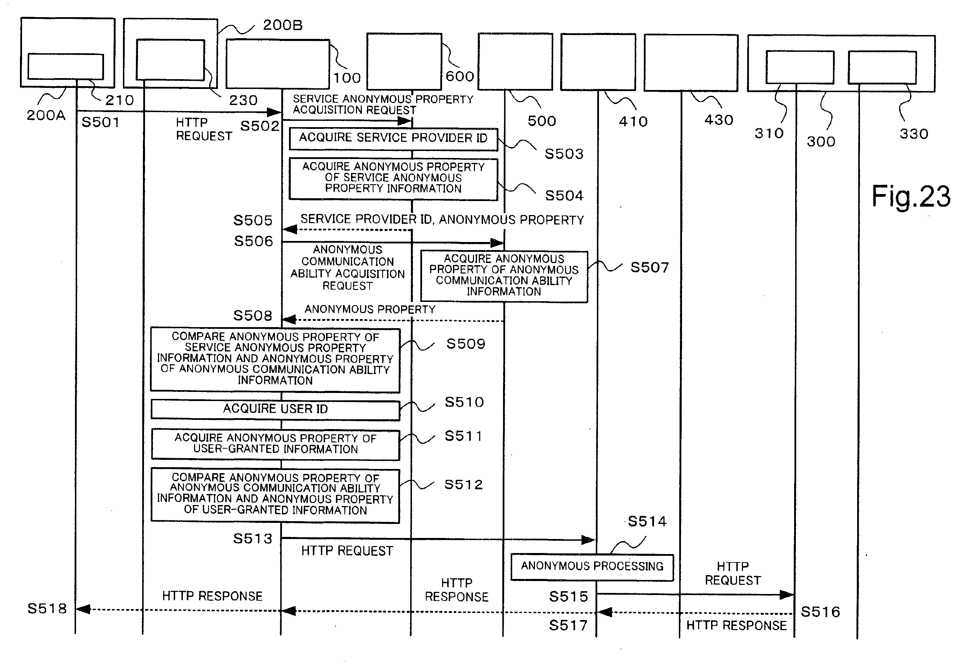

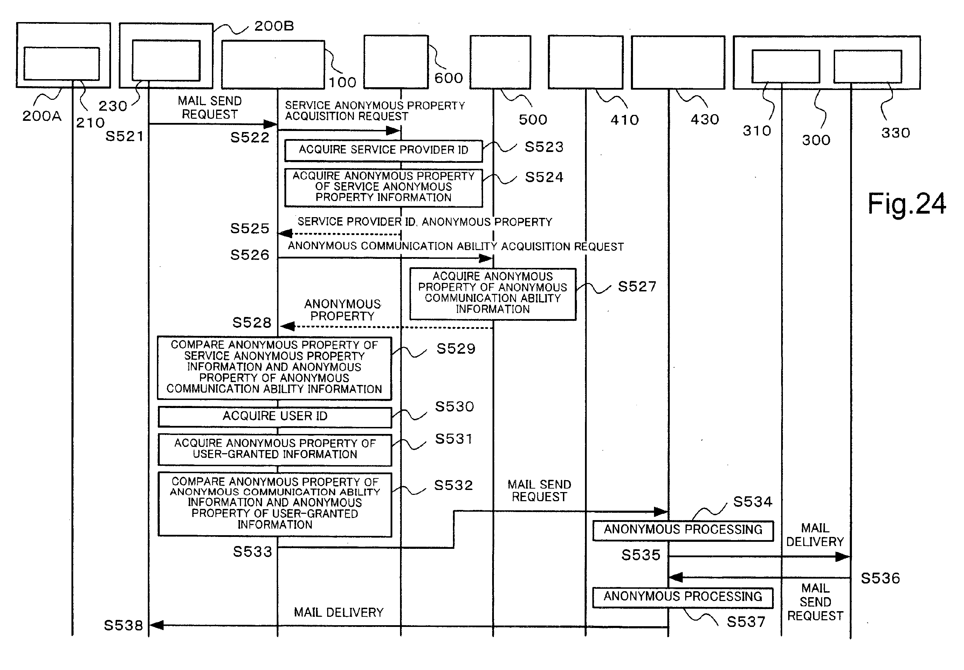

Fig. 23 and Fig. 24 are sequence diagrams showing operations of the fifth exemplary embodiment of the present invention.

In the fifth exemplary embodiment of the present invention, it is supposed that the user accesses the WWW server 310 of the service apparatus 300 from the browser 210 of the user terminal 200A. It is supposed that a setting to go through the anonymous communication apparatus 410 has been made to the browser 210. It is also supposed that the user transmits a mail to a mail address of the same service provider from the mail client 230 of the user terminal 200B. It is supposed that a setting to access the anonymous communication apparatus 430 to send and receive a mail has been made to the mail client 230. Also, it is supposed that a service provider accesses the anonymous communication apparatus 430 from the mail client 330 to send and receive a mail.

First, a user operates the browser 210 of the user terminal 200 and requests acquisition of the home page of the WWW server 310 of the service apparatus 300.

Operations after the browser 210 has transmitted an HTTP request to the communication control apparatus 100 until the communication control apparatus 100 determines whether the anonymous property of the anonymous communication apparatus 410 meets the anonymous property which the service apparatus 300 requires (Steps S501 to S509) become similar to those of the second exemplary embodiment (Steps S201 to 5209) of the present invention.

When the anonymous property of the anonymous communication apparatus 410 meets the anonymous property which the service apparatus 300 requires, the communication control unit 120 uses the HTTP user identifier which has been given to the HTTP request as a user attribute and refers to the user management information 131 of the user management information memory unit 130, and acquires a user ID using the user attribute as a retrieval key (Step S510). Next, the communication control unit 120 refers to the user-granted information 111 of the user-granted information memory unit 110, and acquires an anonymous property using the user ID and the service provider ID as a retrieval key (Step S511).

For example, the communication control unit 120 refers to the user management information 131 of Fig. 22 and acquires "sub0001" as a user ID corresponding to the HTTP user identifier "user0001" which is a user attribute. The communication control unit 120 refers to the user-granted information 111 and acquires "level 1" as an anonymous property corresponding to the user ID "sub0001" and the service provider ID "sp0001 ".

Next, the communication control unit 120 compares the anonymous level of the anonymous property of the anonymous communication ability information 511 acquired from the anonymous communication ability management apparatus 500 and the anonymous level of the anonymous property of the user-granted information 111 acquired from the user-granted information memory unit 110, and determines whether the anonymous property of the anonymous communication apparatus 410 meets the anonymous property permitted by the user (Step S512).

When the communication control unit 120 succeeds in acquiring the anonymous property of the user-granted information 111 and, at the same time, the anonymous level of the anonymous property of the anonymous communication ability information 511 is larger than or equal to the anonymous level of the anonymous property of the user-granted information 111, the anonymous property of the anonymous communication apparatus 410 meets the anonymous property which the user permits.

For example, in the above-mentioned example, because the anonymous level of the anonymous property of the anonymous communication ability information 511 ("level 1") is equal to the anonymous level of the anonymous property of the user-granted information 111 ("level 1"), the anonymous property of the anonymous communication apparatus 410 meets the anonymous property which the user permits.

Henceforth, operations that the communication control unit 120 transmits an HTTP request to the anonymous communication apparatus 410 and communicates with the WWW server 310 (Steps S513 to S518) are similar to those of the second exemplary embodiment of the present invention (Steps S212 to S217).

Next, the user operates the mail client 230 of the user terminal 200B, and performs transmission of a mail to the identical service provider.

The mail client 230 transmits a communication request (mail send request) to the communication control apparatus 100 (Step S521). Here, it is supposed that a destination mail address, a source mail address and an anonymous communication apparatus address of the anonymous communication apparatus 430 that carries out anonymous communication are included in a mail send request.

For example, the mail client 230 transmits a mail send request including a destination mail address "sp0001@abc-restaurant.com", a source mail address "user0001@carrier.com" and an anonymous communication apparatus address "mailserver.pseudonym.com" to the communication control apparatus 100.

The communication control unit 120 of the communication control apparatus 100 that has received the mail send request uses the destination mail address as a service attribute, and transmits a service anonymous property information acquisition request including the service attribute to the service anonymous property management apparatus 600 (Step S522).

For example, the communication control unit 120 uses the destination mail address "sp0001@abc-restaurant.com" as a service attribute, and transmits a service anonymous property information acquisition request.

The service anonymous property management apparatus 600 refers to the service provider management information 621 of the service provider management information memory unit 620, and acquires a service provider ID using the service attribute as a retrieval key (Step S523). The service anonymous property management apparatus 600 also refers to the service anonymous property information 611 of the service anonymous property information memory unit 610, and acquires an anonymous property using as a retrieval key the service provider ID which has been acquired (Step S524). The service anonymous property management apparatus 600 sends back the service provider ID and the anonymous property which have been acquired to the communication control apparatus 100 (Step S525).

For example, the service anonymous property management apparatus 600 refers to the service provider management information 621 of Fig. 22, and acquires "sp0001" as a service provider ID corresponding to the destination mail address "sp0001@abc-restaurant.com" that is a service attribute. The service anonymous property management apparatus 600 refers to the service anonymous property information 611, and acquires "level 1" as an anonymous property corresponding to the service provider ID "sp0001" and sends back them to the communication control apparatus 100.

Next, the communication control unit 120 of the communication control apparatus 100 transmits an anonymous communication ability acquisition request including the anonymous communication apparatus address that has been added to the mail send request to the anonymous communication ability management apparatus 500 (Step S526). The anonymous communication ability management apparatus 500 refers to the anonymous communication ability information 511 of the anonymous communication ability memory unit 510, acquires an anonymous property using the anonymous communication apparatus address as a retrieval key, and sends back it to the communication control apparatus 100 (Steps S527 and S528).

For example, the communication control unit 120 transmits an anonymous communication ability acquisition request including the anonymous communication apparatus address "mailserver.pseudonym.com" to the anonymous communication ability management apparatus 500. The anonymous communication ability management apparatus 500 refers to the anonymous communication ability information 511 of Fig. 22, and acquires "level 1" as an anonymous property corresponding to the anonymous communication apparatus address "mailserver.pseudonym.com" and sends back it to the communication control apparatus 100.

Next, the communication control unit 120 of the communication control apparatus 100 compares the anonymous level of the anonymous property of the service anonymous property information 61 1 acquired from the service anonymous property management apparatus 600 and the anonymous level of the anonymous property of the anonymous communication ability information 511 acquired from the anonymous communication ability management apparatus 500, and determines whether the anonymous property of the anonymous communication apparatus 430 meets the anonymous property required by the service apparatus 300 (Step S529).

When the anonymous level of the anonymous property of the service anonymous property information 611 is larger than or equal to the anonymous level of the anonymous property of the anonymous communication ability information 511, the anonymous property of the anonymous communication apparatus 430 meets the anonymous property which the service apparatus 300 requests.

For example, in the above-mentioned example, because the anonymous level of the anonymous property of the service anonymous property information 61 1 ("level 1") is equal to the anonymous level of the anonymous property of the anonymous communication ability information 511 ("level 1") , the anonymous property of the anonymous communication apparatus 430 meets the anonymous property which the service apparatus 300 requests.

When the anonymous property of the anonymous communication apparatus 430 meets the anonymous property which the service apparatus 300 requires, the communication control unit 120 uses the source mail address as a user attribute, refers to the user management information 131 of the user management information memory unit 130, and acquires a user ID using the user attribute as a retrieval key (Step S530). Next, the communication control unit 120 refers to the user-granted information 111 of the user-granted information memory unit 110, and acquires an anonymous property using the user ID and the service provider ID as a retrieval key (Step S531).

For example, the communication control unit 120 uses the source mail address "user0001@carrier.com" as a user attribute, refers to the user management information 131 of Fig. 22, and acquires "sub0001" as a user ID corresponding to the user attribute. The communication control unit 120 refers to the user-granted information 111 and acquires "level 1" as an anonymous property corresponding to the user ID "sub0001 and the service provider ID "sp0001".

Next, the communication control unit 120 compares the anonymous level of the anonymous property of the anonymous communication ability information 511 acquired from the anonymous communication ability management apparatus 500 and the anonymous level of the anonymous property of the user-granted information 111 acquired from the user-granted information memory unit 110, and determines whether the anonymous property of the anonymous communication apparatus 430 meets the anonymous property permitted by the user (Step S532).

When the communication control unit 120 succeeds in acquiring the anonymous property of the user-granted information 111 and, at the same time, the anonymous level of the anonymous property of the anonymous communication ability information 511 is larger than or equal to the anonymous level of the anonymous property of the user-granted information 111, the anonymous property of the anonymous communication apparatus 430 meets the anonymous property which the user permits.

For example, in the above-mentioned example, because the anonymous level of the anonymous property of the anonymous communication ability information 511 ("level 1") is equal to the anonymous level of the anonymous property of the user-granted information 111 ("level 1"), the anonymous property of the anonymous communication apparatus 430 meets the anonymous property which the user permits.

When the anonymous property of the anonymous communication apparatus 430 meets the anonymous property which the user permits, the communication control unit 120 transmits the mail send request to the anonymous communication apparatus 430 (Step S533).

When the mail send request is received, the anonymous communication unit 431 of the anonymous communication apparatus 430 performs anonymous processing (conversion of a user attribute (here, a source mail address)) according to the anonymous property of anonymous communication which the anonymous communication apparatus 430 carries out (Step S534).

For example, in the above-mentioned example, because the anonymous property of anonymous communication which the anonymous communication apparatus 430 carries out (the anonymous property of the anonymous communication ability information 511) is "level 1", the anonymous communication unit 431 converts the source mail address "user0001@carrier.com" given to the mail send request as a user attribute into a source mail address "user54824488@carrier.com" which is an anonymous user attribute and which is different for each service provider.

Note that, when an anonymous property of anonymous communication which the anonymous communication apparatus 430 carries out is "level 0", the anonymous communication unit 431 gives a same source mail address (a source mail address "user0001@carrier.com" given by the mail client 230, for example) for all service providers. When an anonymous property of anonymous communication which the anonymous communication apparatus 430 carries out is "level 2", the anonymous communication unit 431 gives a different source mail address for each mail send request.

According to a request from the mail client 330, the anonymous communication unit 431 delivers the mail on which anonymous processing has been performed to the mail client 330 (Step S535).

Next, the mail client 330 transmits a mail send request in which the source mail address of the received mail (the converted mail address) is set as the destination mail address to the anonymous communication apparatus 430 (Step S536). When the mail send request is received, the anonymous communication unit 431 of the anonymous communication apparatus 430 performs anonymous processing (here, processing for converting the destination mail address into the original mail address given by the mail client 230 as a source mail address) according to the anonymous property of anonymous communication which the anonymous communication apparatus 430 carries out (Step S537). According to a request from the mail client 230, the anonymous communication unit 431 delivers the mail on which anonymous processing has been performed to the mail client 230 (Step S538).

By the above, the operations of the fifth exemplary embodiment of the present invention are completed.

According to the fifth exemplary embodiment of the present invention, in an anonymous communication system, even when one user possesses a plurality of user terminals, an anonymous property can be assured. The reason of this is that an anonymous property of the user-granted information 111 is managed for each user identifier of a plurality of users, and when the user terminal 200 accesses the service apparatus 300, the communication control apparatus 100 acquires an anonymous property of the user-granted information 111 based on the user identifier of the user requesting the access, and performs access control (open and close control of communication).

### (Sixth exemplary embodiment)

Next, a sixth exemplary embodiment of the present invention will be described in detail with reference to drawings.

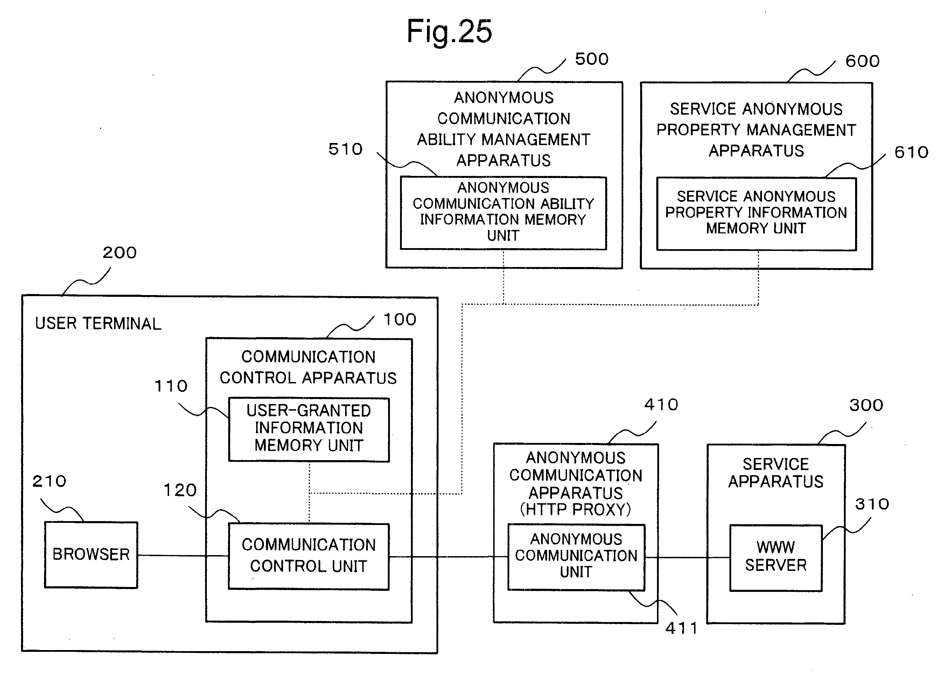

Fig. 25 is a diagram showing a structure of an anonymous communication system in the sixth exemplary embodiment of the present invention. Referring to Fig. 25, in the sixth exemplary embodiment of an anonymous communication system of the present invention, the user terminal 200 includes the communication control apparatus 100. Operations of the sixth exemplary embodiment of the present invention are similar to those of the first exemplary embodiment of the present invention except that communication between the browser 210 and the communication control apparatus 100 is performed inside the user terminal 200.

According to the sixth exemplary embodiment of the present invention, in an anonymous communication system, a user can receive services provided by a service provider with an easier mind. The reason is that, because the communication control apparatus 100 inside the user terminal 200 performs access control (open and close control of communication), a larger amount of information than an amount permitted by a user is not transmitted to outside the user terminal 200.

Also, according to the sixth exemplary embodiment of the present invention, even in an open network like the Internet, a communication common carrier can provide anonymous communication by an anonymous communication apparatus to a user. The reason of this is that, because the communication control apparatus 100 inside the user terminal 200 performs access control (open and close control of communication) based on the service anonymous property information 611 and the anonymous communication ability information 511, the both being provided by the communication common carrier for a user, the communication common carrier can establish an anonymous communication system by installing an anonymous communication apparatus on the open network which is accessible from the user terminal 200.

Also, according to the sixth exemplary embodiment of the present invention, it is possible to prevent an event in which a user terminal is connected to a network lacking in anonymous communication ability by mistake, and, a larger amount of information than an amount permitted by a user is transmitted from the user terminal by accessing a service apparatus via the network. The reason is that the communication control apparatus 100 inside the user terminal 200 performs access control (open and close control of communication) based on the anonymous communication ability information 511 of an anonymous communication apparatus used when accessing a service provider.

Also, according to the sixth exemplary embodiment of the present invention, access control (open and close control of communication) can be performed in the side of a terminal which begins communication (which transmits a communication request) before beginning communication on a network. The reason is that the communication control apparatus 100 inside the user terminal 200 performs access control taking a communication request from a communication application as a trigger of the access control.

An effect of the present invention is that, in an anonymous communication system, it is possible to assure an anonymous property which a service provider requests and an anonymous property which a user permits.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

## Claims

1. A communication control apparatus (100), comprising:
a communication control unit (120) adapted to control access from a user terminal (200) to a service apparatus (300) via an anonymous communication apparatus (400), based on service anonymous property information indicating an anonymity level for a user required by a service provider in a service provided with said service apparatus (300), anonymous communication ability information indicating an anonymity level of an anonymous communication which said anonymous communication apparatus (400) is able to carry out, and user-granted information indicating an anonymity level for said user permitted by said user in communication between said user terminal (200) and said service apparatus (300).

2. The apparatus according to claim 1, wherein
said communication control unit (120) is adapted to determine whether access from said user terminal (200) to said service apparatus (300) via said anonymous communication apparatus (400) is permitted or not when receiving a communication request from said user terminal, and, if access is permitted, to transfer said communication request to said anonymous communication apparatus.

3. The apparatus according to claim 2, wherein,
when an anonymity level of said anonymous communication carried out by said anonymous communication apparatus (400) meets a condition of an anonymity level indicated by said service anonymous property information and an anonymity level of said anonymous communication carried out by said anonymous communication apparatus (400) meets a condition of an anonymity level indicated by said user-granted information, said communication control unit is adapted to permit access from said user terminal (200) to said service apparatus (300) via said anonymous communication apparatus.

4. The apparatus according to claim 2, wherein
said communication control unit (120) is adapted to set an anonymity level of said anonymous communication carried out by said anonymous communication apparatus based on said anonymous communication ability information such that an anonymity level of said anonymous communication carried out by said anonymous communication apparatus meets a condition of an anonymity level indicated by said service anonymous property information and an anonymity level of said anonymous communication carried out by said anonymous communication apparatus meets a condition of an anonymity level indicated by said user-granted information.

5. The apparatus according to claim 2, wherein,
when, for each of a plurality of services, an anonymity level of said anonymous communication carried out by said anonymous communication apparatus used in said service meets a condition of an anonymity level indicated by said service anonymous property information and an anonymity level of said anonymous communication carried out by said anonymous communication apparatus used in said service meets a condition of an anonymity level indicated by said user-granted information, said communication control unit is adapted to permit access from said user terminal to said service apparatus for said each of a plurality of services.

6. The apparatus according to claim 2, wherein
when, for all of a plurality of services, an anonymity level of said anonymous communication carried out by said anonymous communication apparatus used in said service meets a condition of an anonymity level indicated by said service anonymous property information and an anonymity level of said anonymous communication carried out by said anonymous communication apparatus used in said service meets a condition of an anonymity level indicated by said user-granted information, said communication control unit is adapted to permit access from said user terminal to said service apparatus for said all of a plurality of services.

7. A user terminal apparatus (200), comprising:
a communication application processing unit; and
a communication control apparatus (100) according to any one of claims 1 to 6 which is adapted to control access from said terminal by means of said communication application processing unit to a service apparatus (300).

8. An anonymous communication system, comprising:
a user terminal (200) according to claim 7;
a service apparatus (300);
an anonymous communication apparatus (400) which is adapted to provide anonymous communication between said user terminal and said service apparatus; and
a communication control apparatus (100) according to any one of claims 1 to 6.

9. The anonymous communication system according to claim 8, comprising
the communication control apparatus (100) according to claim 4, wherein said anonymous communication apparatus is adapted to carry out said anonymous communication between said user terminal and said service apparatus with said set anonymity level.

10. The anonymous communication system according to claim 8, wherein
said anonymous communication apparatus (400) which is adapted to carry out said anonymous communication is provided for each of a plurality of communication means, and
said service apparatus (300) is adapted to provide a plurality of services using different communication means,
said system comprising a communication control apparatus according to claim 5.

11. The anonymous communication system according to claim 8, wherein
said anonymous communication apparatus (400) which is adapted to carry out said anonymous communication is provided for each communication means, and
said service apparatus (300) provides a plurality of services using different communication means,
said system comprising a communication control apparatus (100) according to claim 6.

12. The anonymous communication system according to claim 8 and comprising a communication control apparatus (100) according to claim 3 or 4, wherein
said service anonymous property information indicates an anonymity level associated with a service attribute, which anonymity level is required by said service provider for said service attribute,
said anonymous communication ability information indicates an anonymity level of said anonymous communication associated with an anonymous communication apparatus identifier, said anonymous communication apparatus (400) with said anonymous communication apparatus identifier being adapted to carry out said anonymous communication,
said user-granted information indicates an anonymity level associated with said service attribute, which anonymity level is permitted by said user for said service attribute, and
said communicationcontrol apparatus (100) is adapted to extract an anonymity level required by said service provider for said service attribute included in said communication request from said service anonymous property information, to extract an anonymity level of said anonymous communication for said anonymous communication apparatus identifier of said anonymous communication apparatus (400), said anonymous communication apparatus (400) being used in a service of said service attribute included in said communication request, from said anonymous communication ability information, and to extract an anonymity level permitted by said user for said service attribute included in said communication request from said user-granted information.

13. The anonymous communication system according to claim 8 and comprising a communication control apparatus (100) according to claim 5 or 6, wherein
said service anonymous property information indicates an anonymity level associated with a service provider identifier, which anonymity level is required by said service provider with said service provider identifier,
said anonymous communication ability information indicates an anonymity level of said anonymous communication associated with an anonymous communication apparatus identifier, said anonymous communication apparatus (400) with said anonymous communication apparatus identifier being adapted to carry out said anonymous communication,
and said user-granted information indicates an anonymity level associated with said service provider identifier, which anonymity level is permitted by said user for said service provider identifier, and
said communication control apparatus (100) is adapted to acquire said service provider identifier of said service provider providing a service of a service attribute included in said communication request, to extract an anonymity level required by said service provider with said service provider identifier from said service anonymous property information, to extract an anonymity level of said anonymous communicationfor said anonymous communication apparatus identifier of said anonymous communication apparatus (400), said anonymous communication apparatus (400) being used in a service of said service attribute included in said communication request, from said anonymous communication ability information, and to extract an anonymity level permitted by said user for said service provider identifier for said user-granted information.

14. The anonymous communication system according to claim 12 or 13, wherein
said user-granted information (111) indicates an anonymity level permitted by said user for a user identifier of each of a plurality of said users, and
said communication control apparatus (100) is adapted to acquire said user identifiers of said user using a user attribute included in said communication request, and to extract an anonymity level permitted by said user with said user identifier from said user-granted information.

15. A communication control method, comprising:
controlling access from a user terminal (200) to a service apparatus (300) via an anonymous communication apparatus (400), based on service anonymous property information indicating an anonymity level for a user required by a service provider in a service provided with said service apparatus, anonymous communication ability information indicating an anonymity level of an anonymous communication which said anonymous communication apparatus is able to carry out, and user-granted information indicating an anonymity level for said user permitted by said user in communication between said user terminal and said service apparatus.

16. The communication control method according to claim 15, wherein
said controlling access to said service apparatus determines whether access from said user terminal to said service apparatus via said anonymous communication apparatus is permitted or not when receiving a communication request from said user terminal, and, if access is permitted, transfers said communication request to said anonymous communication apparatus.

17. The communication control method according to claim 16, wherein,
when an anonymity level of said anonymous communication carried out by said anonymous communication apparatus meets a condition of an anonymity level indicated by said service anonymous property information and an anonymity level of said anonymous communication carried out by said anonymous communication apparatus meets a condition of an anonymity level indicated by said user-granted information, said determining whether access to said service apparatus is permitted or not, permits access from said user terminal to said service apparatus via said anonymous communication apparatus.

18. The communication control method according to claim 16, wherein
said determining whether access to said service apparatus is permitted or not sets an anonymity level of said anonymous communication carried out by said anonymous communication apparatus based on said anonymous communication ability information such that an anonymity level of said anonymous communication carried out by said anonymous communication apparatus meets a condition of an anonymity level indicated by said service anonymous property information and an anonymity level of said anonymous communication carried out by said anonymous communication apparatus meets a condition of an anonymity level indicated by said user-granted information.

19. The communication control method according to claim 16, wherein,
when, for each of a plurality of services, an anonymity level of said anonymous communication carried out by said anonymous communication apparatus used in said service meets a condition of an anonymity level indicated by said service anonymous property information and an anonymity level of said anonymous communication carried out by said anonymous communication apparatus used in said service meets a condition of an anonymity level indicated by said user-granted information, said determining whether access to said service apparatus is permitted or not, permits access from said user terminal to said service apparatus for said all of a plurality of services.

20. The communication control method according to claim 16 wherein
when for all of a plurality of services, an anonymity level of said anonymous communication carried out by said anonymous communication apparatus used in said service meets a condition of an anonymity level indicated by said service anonymous property information and an anonymity level of said anonymous communication carried out by said anonymous communication apparatus used in said service meets a condition of an anonymity level indicated by said user-granted information, said determining whether access to said service apparatus is permitted or not, permits access from said user terminal to said service apparatus for said all of a plurality of services.

21. A computer-readable medium recorded thereon a communication control program to allow a computer to execute the method of any one of claims 15 to 20.

## Patentansprüche

1. Kommunikationssteuervorrichtung (100), welche Folgendes aufweist:
eine Kommunikationssteuereinheit (120), die dafür eingerichtet ist, den Zugriff von einem Benutzerendgerät (200) auf eine Dienstvorrichtung (300) über eine anonyme Kommunikationsvorrichtung (400) zu steuern, und zwar auf der Grundlage von Dienstanonymitätseigenschaftsinformationen, welche ein Anonymitätsniveau für einen Benutzer, das von einem Dienstanbieter bei einem mit der Dienstvorrichtung (300) bereitgestellten Dienst gefordert wird, angeben, Anonym-Kommunikationsfähigkeit-Informationen, welche ein Anonymitätsniveau einer anonymen Kommunikation angeben, welche die anonyme Kommunikationsvorrichtung (400) ausführen kann, und benutzergewährten Informationen, die ein Anonymitätsniveau für den Benutzer angeben, das vom Benutzer bei der Kommunikation zwischen dem Benutzerendgerät (200) und der Dienstvorrichtung (300) erlaubt wird.

2. Vorrichtung nach Anspruch 1, wobei
die Kommunikationssteuereinheit (120) dafür eingerichtet ist, zu bestimmen, ob der Zugriff vom Benutzerendgerät (200) auf die Dienstvorrichtung (300) über die anonyme Kommunikationsvorrichtung (400) erlaubt ist oder nicht, wenn eine Kommunikationsanforderung vom Benutzerendgerät empfangen wird, und, falls der Zugriff erlaubt ist, die Kommunikationsanforderung zur anonymen Kommunikationsvorrichtung zu übertragen.

3. Vorrichtung nach Anspruch 2, wobei
wenn ein Anonymitätsniveau der von der anonymen Kommunikationsvorrichtung (400) ausgeführten anonymen Kommunikation eine Bedingung eines von den Dienstanonymitätseigenschaftsinformationen angegebenen Anonymitätsniveaus erfüllt und ein Anonymitätsniveau der von der anonymen Kommunikationsvorrichtung (400) ausgeführten anonymen Kommunikation eine Bedingung eines von den benutzergewährten Informationen angegebenen Anonymitätsniveaus erfüllt, die Kommunikationssteuereinheit dafür eingerichtet ist, den Zugriff vom Benutzerendgerät (200) auf die Dienstvorrichtung (300) über die anonyme Kommunikationsvorrichtung zu erlauben.

4. Vorrichtung nach Anspruch 2, wobei
die Kommunikationssteuereinheit (120) dafür eingerichtet ist, ein Anonymitätsniveau der von der anonymen Kommunikationsvorrichtung ausgeführten anonymen Kommunikation auf der Grundlage der Anonym-Kommunikationsfähigkeit-Informationen festzulegen, so dass ein Anonymitätsniveau der von der anonymen Kommunikationsvorrichtung ausgeführten anonymen Kommunikation eine Bedingung eines von den Dienstanonymitätseigenschaftsinformationen angegebenen Anonymitätsniveaus erfüllt und ein Anonymitätsniveau der von der anonymen Kommunikationsvorrichtung ausgeführten anonymen Kommunikation eine Bedingung eines von den benutzergewährten Informationen angegebenen Anonymitätsniveaus erfüllt.

5. Vorrichtung nach Anspruch 2, wobei
wenn für jeden von mehreren Diensten ein Anonymitätsniveau der von der in dem Dienst verwendeten anonymen Kommunikationsvorrichtung ausgeführten anonymen Kommunikation eine Bedingung eines von den Dienstanonymitätseigenschaftsinformationen angegebenen Anonymitätsniveaus erfüllt und ein Anonymitätsniveau der von der in dem Dienst verwendeten anonymen Kommunikationsvorrichtung ausgeführten anonymen Kommunikation eine Bedingung eines von den benutzergewährten Informationen angegebenen Anonymitätsniveaus erfüllt, die Kommunikationssteuereinheit dafür eingerichtet ist, den Zugriff vom Benutzerendgerät auf die Dienstvorrichtung für jeden von mehreren Diensten zu erlauben.

6. Vorrichtung nach Anspruch 2, wobei
wenn für alle von mehreren Diensten ein Anonymitätsniveau der von der in dem Dienst verwendeten anonymen Kommunikationsvorrichtung ausgeführten anonymen Kommunikation eine Bedingung eines von den Dienstanonymitätseigenschaftsinformationen angegebenen Anonymitätsniveaus erfüllt und ein Anonymitätsniveau der von der in dem Dienst verwendeten anonymen Kommunikationsvorrichtung ausgeführten anonymen Kommunikation eine Bedingung eines von den benutzergewährten Informationen angegebenen Anonymitätsniveaus erfüllt, die Kommunikationssteuereinheit dafür eingerichtet ist, den Zugriff vom Benutzerendgerät auf die Dienstvorrichtung für jeden von mehreren Diensten zu erlauben.

7. Benutzerendgerät (200), welches Folgendes aufweist:
eine Kommunikationsanwendungsverarbeitungseinheit und
eine Kommunikationssteuervorrichtung (100) nach einem der Ansprüche 1 bis 6, die dafür eingerichtet ist, den Zugriff vom Endgerät durch die Kommunikationsanwendungsverarbeitungseinheit auf eine Dienstvorrichtung (300) zu steuern.

8. Anonymes Kommunikationssystem, welches Folgendes aufweist:
ein Benutzerendgerät (200) nach Anspruch 7,
eine Dienstvorrichtung (300),
eine anonyme Kommunikationsvorrichtung (400), die dafür eingerichtet ist, eine anonyme Kommunikation zwischen dem Benutzerendgerät und der Dienstvorrichtung bereitzustellen, und
eine Kommunikationssteuervorrichtung (100) nach einem der Ansprüche 1 bis 6.

9. Anonymes Kommunikationssystem nach Anspruch 8, welches Folgendes aufweist:
die Kommunikationssteuervorrichtung (100) nach Anspruch 4, wobei die anonyme Kommunikationsvorrichtung dafür eingerichtet ist, die anonyme Kommunikation zwischen dem Benutzerendgerät und der Dienstvorrichtung mit dem festgelegten Anonymitätsniveau auszuführen.

10. Anonymes Kommunikationssystem nach Anspruch 8, wobei die anonyme Kommunikationsvorrichtung (400), die dafür eingerichtet ist, die anonyme Kommunikation auszuführen, für jedes von mehreren Kommunikationsmitteln bereitgestellt ist, und
die Dienstvorrichtung (300) dafür eingerichtet ist, mehrere Dienste unter Verwendung verschiedener Kommunikationsmittel bereitzustellen,
wobei das System eine Kommunikationssteuervorrichtung nach Anspruch 5 aufweist.

11. Anonymes Kommunikationssystem nach Anspruch 8, wobei die anonyme Kommunikationsvorrichtung (400), die dafür eingerichtet ist, die anonyme Kommunikation auszuführen, für jedes Kommunikationsmittel bereitgestellt ist, und
die Dienstvorrichtung (300) mehrere Dienste unter Verwendung verschiedener Kommunikationsmittel bereitstellt,
wobei das System eine Kommunikationssteuervorrichtung (100) nach Anspruch 6 aufweist.

12. Anonymes Kommunikationssystem nach Anspruch 8, welches eine Kommunikationssteuervorrichtung (100) nach Anspruch 3 oder 4 aufweist, wobei
die Dienstanonymitätseigenschaftsinformationen ein Anonymitätsniveau angeben, das mit einem Dienstattribut in Zusammenhang steht, wobei das Anonymitätsniveau vom Dienstanbieter für das Dienstattribut gefordert wird,
die Anonym-Kommunikationsfähigkeit-Informationen ein Anonymitätsniveau der anonymen Kommunikation in Zusammenhang mit einer Anonyme-Kommunikationsvorrichtung-Kennung angeben, wobei die anonyme Kommunikationsvorrichtung (400) mit der Anonym-Kommunikationsvorrichtung-Kennung dafür eingerichtet ist, die anonyme Kommunikation auszuführen,
die benutzergewährten Informationen ein Anonymitätsniveau in Zusammenhang mit dem Dienstattribut angeben, wobei das Anonymitätsniveau vom Benutzer für das Dienstattribut erlaubt ist, und
die Kommunikationssteuervorrichtung (100) dafür eingerichtet ist, ein Anonymitätsniveau zu extrahieren, das der Dienstanbieter für das in der Kommunikationsanforderung enthaltene Dienstattribut aus den Dienstanonymitätseigenschaftsinformationen anfordert, ein Anonymitätsniveau der anonymen Kommunikation für die Anonym-Kommunikationsvorrichtung-Kennung der anonymen Kommunikationsvorrichtung (400), wobei die anonyme Kommunikationsvorrichtung (400) in einem Dienst des in der Kommunikationsanforderung enthaltenen Dienstattributs verwendet wird, aus den Anonym-Kommunikationsfähigkeit-Informationen zu extrahieren und ein Anonymitätsniveau, das vom Benutzer für das in der Kommunikationsanforderung enthaltene Dienstattribut erlaubt ist, aus den benutzergewährten Informationen zu extrahieren.

13. Anonymes Kommunikationssystem nach Anspruch 8, welches eine Kommunikationssteuervorrichtung (100) nach Anspruch 5 oder 6 aufweist, wobei
die Dienstanonymitätseigenschaftsinformationen ein Anonymitätsniveau in Zusammenhang mit einer Dienstanbieterkennung angeben, wobei das Anonymitätsniveau vom Dienstanbieter mit der Dienstanbieterkennung gefordert wird,
die Anonym-Kommunikationsfähigkeit-Informationen ein Anonymitätsniveau der anonymen Kommunikation in Zusammenhang mit einer Anonym-Kommunikationsvorrichtung-Kennung angeben, wobei die anonyme Kommunikationsvorrichtung (400) mit der Anonym-Kommunikationsvorrichtung-Kennung dafür eingerichtet ist, die anonyme Kommunikation auszuführen,
und die benutzergewährten Informationen ein Anonymitätsniveau in Zusammenhang mit der Dienstanbieterkennung angeben, wobei das Anonymitätsniveau vom Benutzer für die Dienstanbieterkennung erlaubt ist, und
die Kommunikationssteuervorrichtung (100) dafür eingerichtet ist, die Dienstanbieterkennung des Dienstanbieters zu erfassen, der einen Dienst eines in der Kommunikationsanforderung enthaltenen Dienstattributs bereitstellt, ein Anonymitätsniveau, das vom Dienstanbieter mit der Dienstanbieterkennung gefordert wird, aus den Dienstanonymitätseigenschaftsinformationen zu extrahieren, ein Anonymitätsniveau der anonymen Kommunikation für die Anonym-Kommunikationsvorrichtung-Kennung der anonymen Kommunikationsvorrichtung (400) aus den Anonym-Kommunikationsfähigkeit-Informationen zu extrahieren, wobei die anonyme Kommunikationsvorrichtung (400) in einem Dienst des in der Kommunikationsanforderung enthaltenen Dienstattributs verwendet wird, und ein Anonymitätsniveau, das vom Benutzer für die Dienstanbieterkennung erlaubt ist, aus den benutzergewährten Informationen zu extrahieren.

14. Anonymes Kommunikationssystem nach Anspruch 12 oder 13, wobei
die benutzergewährten Informationen (111) ein Anonymitätsniveau angeben, das vom Benutzer für eine Benutzerkennung jedes von mehreren Benutzern erlaubt ist, und
die Kommunikationssteuervorrichtung (100) dafür eingerichtet ist, die Benutzerkennungen des Benutzers unter Verwendung eines in der Kommunikationsanforderung enthaltenen Benutzerattributs zu erfassen und ein vom Benutzer mit der Benutzerkennung erlaubtes Anonymitätsniveau aus den benutzergewährten Informationen zu extrahieren.

15. Kommunikationssteuerverfahren, welches folgende Schritte aufweist:
Steuern des Zugriffs von einem Benutzerendgerät (200) auf eine Dienstvorrichtung (300) über eine anonyme Kommunikationsvorrichtung (400) auf der Grundlage von Dienstanonymitätseigenschaftsinformationen, die ein von einem Dienstanbieter in einem mit der Dienstvorrichtung bereitgestellten Dienst gefordertes Anonymitätsniveau für einen Benutzer angeben, Anonym-Kommunikationsfähigkeit-Informationen, die ein Anonymitätsniveau einer anonymen Kommunikation angeben, welche die anonyme Kommunikationsvorrichtung ausführen kann, und benutzergewährten Informationen, die ein Anonymitätsniveau für den Benutzer angeben, das vom Benutzer bei der Kommunikation zwischen dem Benutzerendgerät und der Dienstvorrichtung erlaubt wird.

16. Kommunikationssteuerverfahren nach Anspruch 15, wobei das Steuern des Zugriffs auf die Dienstvorrichtung bestimmt, ob der Zugriff vom Benutzerendgerät auf die Dienstvorrichtung über die anonyme Kommunikationsvorrichtung erlaubt wird oder nicht, wenn eine Kommunikationsanforderung vom Benutzerendgerät empfangen wird, und, falls der Zugriff erlaubt wird, die Kommunikationsanforderung zur anonymen Kommunikationsvorrichtung übertragen wird.

17. Kommunikationssteuerverfahren nach Anspruch 16, wobei,
wenn ein Anonymitätsniveau der von der anonymen Kommunikationsvorrichtung ausgeführten anonymen Kommunikation eine Bedingung eines von den Dienstanonymitätseigenschaftsinformationen angegebenen Anonymitätsniveaus erfüllt und ein Anonymitätsniveau der von der anonymen Kommunikationsvorrichtung ausgeführten anonymen Kommunikation eine Bedingung eines durch die benutzergewährten Informationen angegebenen Anonymitätsniveaus erfüllt, die Bestimmung, ob der Zugriff auf die Dienstvorrichtung erlaubt wird oder nicht, den Zugriff vom Benutzerendgerät auf die Dienstvorrichtung über die anonyme Kommunikationsvorrichtung erlaubt.

18. Kommunikationssteuerverfahren nach Anspruch 16, wobei
die Bestimmung, ob der Zugriff auf die Dienstvorrichtung erlaubt wird oder nicht, ein Anonymitätsniveau der von der anonymen Kommunikationsvorrichtung ausgeführten anonymen Kommunikation auf der Grundlage der Anonym-Kommunikationsfähigkeit-Informationen festlegt, so dass ein Anonymitätsniveau der von der anonymen Kommunikationsvorrichtung ausgeführten anonymen Kommunikation eine Bedingung eines durch die Dienstanonymitätseigenschaftsinformationen angegebenen Anonymitätsniveaus erfüllt und ein Anonymitätsniveau der von der anonymen Kommunikationsvorrichtung ausgeführten anonymen Kommunikation eine Bedingung eines durch die benutzergewährten Informationen angegebenen Anonymitätsniveaus erfüllt.

19. Kommunikationssteuerverfahren nach Anspruch 16, wobei,
wenn für jeden von mehreren Diensten ein Anonymitätsniveau der von der in dem Dienst verwendeten anonymen Kommunikationsvorrichtung ausgeführten anonymen Kommunikation eine Bedingung eines von den Dienstanonymitätseigenschaftsinformationen angegebenen Anonymitätsniveaus erfüllt und ein Anonymitätsniveau der von der in dem Dienst verwendeten anonymen Kommunikationsvorrichtung ausgeführten anonymen Kommunikation eine Bedingung eines durch die benutzergewährten Informationen angegebenen Anonymitätsniveaus erfüllt, die Bestimmung, ob der Zugriff auf die Dienstvorrichtung erlaubt ist oder nicht, den Zugriff vom Benutzerendgerät auf die Dienstvorrichtung für alle von mehreren Diensten erlaubt.

20. Kommunikationssteuerverfahren nach Anspruch 16, wobei,
wenn für alle von mehreren Diensten ein Anonymitätsniveau der von der in dem Dienst verwendeten anonymen Kommunikationsvorrichtung ausgeführten anonymen Kommunikation eine Bedingung eines von den Dienstanonymitätseigenschaftsinformationen angegebenen Anonymitätsniveaus erfüllt und ein Anonymitätsniveau der von der in dem Dienst verwendeten anonymen Kommunikationsvorrichtung ausgeführten anonymen Kommunikation eine Bedingung eines durch die benutzergewährten Informationen angegebenen Anonymitätsniveaus erfüllt, die Bestimmung, ob der Zugriff auf die Dienstvorrichtung erlaubt ist oder nicht, den Zugriff vom Benutzerendgerät auf die Dienstvorrichtung für alle von mehreren Diensten erlaubt.

21. Computerlesbares Medium, auf dem ein Kommunikationssteuerprogramm aufgezeichnet ist, das einem Computer ermöglicht, das Verfahren nach einem der Ansprüche 15 bis 20 auszuführen.

## Revendications

1. Dispositif de commande de communication (100), comprenant :
une unité de commande de communication (120) prévue pour commander l'accès d'un terminal d'utilisateur (200) à un dispositif de service (300) par l'intermédiaire d'un dispositif de communication anonyme (400), sur la base d'une information de propriété d'anonymat de service indiquant un degré d'anonymat pour un utilisateur exigé par un fournisseur de service dans un service délivré avec le dispositif de service (300), une information d'aptitude à une communication anonyme indiquant un degré d'anonymat d'une communication anonyme que le dispositif de communication anonyme (400) est apte à établir, et une information d'autorisation par l'utilisateur indiquant un degré d'anonymat pour l'utilisateur permis par l'utilisateur en communication entre le terminal d'utilisateur (200) et le dispositif de service (300).

2. Dispositif selon la revendication 1, où
l'unité de commande de communication (120) est prévue pour déterminer si l'accès du terminal d'utilisateur (200) au dispositif de service (300) par l'intermédiaire du dispositif de communication anonyme (400) est permis ou non à la réception d'une demande de communication du terminal d'utilisateur, et, si l'accès est permis, pour transférer la demande de communication au dispositif de communication anonyme.

3. Dispositif selon la revendication 2, où,
quand un degré d'anonymat de la communication anonyme établie par le dispositif de communication anonyme (400) satisfait à une condition d'un degré d'anonymat indiqué par l'information de propriété d'anonymat de service, et qu'un degré d'anonymat de la communication anonyme établie par le dispositif de communication anonyme (400) satisfait à une condition d'un degré d'anonymat indiqué par l'information d'autorisation par l'utilisateur, l'unité de commande de communication est prévue pour permettre l'accès du terminal d'utilisateur (200) au dispositif de service (300) par l'intermédiaire du dispositif de communication anonyme.

4. Dispositif selon la revendication 2, où
l'unité de commande de communication (120) est prévue pour fixer un degré d'anonymat de la communication anonyme établie par le dispositif de communication anonyme sur la base de l'information d'aptitude à une communication anonyme, de telle manière qu'un degré d'anonymat de la communication anonyme établie par le dispositif de communication anonyme satisfait à une condition d'un degré d'anonymat indiqué par l'information de propriété d'anonymat de service, et qu'un degré d'anonymat de la communication anonyme établie par le dispositif de communication anonyme satisfait à une condition d'un degré d'anonymat indiqué par l'information d'autorisation par l'utilisateur.

5. Dispositif selon la revendication 2, où,
quand, pour chaque service d'une pluralité de services, un degré d'anonymat de la communication anonyme établie par le dispositif de communication anonyme utilisé dans le service satisfait à une condition d'un degré d'anonymat indiqué par l'information de propriété d'anonymat de service, et qu'un degré d'anonymat de la communication anonyme établie par le dispositif de communication anonyme utilisé dans le service satisfait à une condition d'un degré d'anonymat indiqué par l'information d'autorisation par l'utilisateur, l'unité de commande de communication est prévue pour permettre l'accès du terminal d'utilisateur au dispositif de service pour chaque service de la pluralité de services.

6. Dispositif selon la revendication 2, où,
quand, pour tous les services d'une pluralité de services, un degré d'anonymat de la communication anonyme établie par le dispositif de communication anonyme utilisé dans le service satisfait à une condition d'un degré d'anonymat indiqué par l'information de propriété d'anonymat de service, et qu'un degré d'anonymat de la communication anonyme établie par le dispositif de communication anonyme utilisé dans le service satisfait à une condition d'un degré d'anonymat indiqué par l'information d'autorisation par l'utilisateur, l'unité de commande de communication est prévue pour permettre l'accès du terminal d'utilisateur au dispositif de service pour tous les services de la pluralité de services.

7. Dispositif terminal d'utilisateur (200), comprenant :
une unité de traitement d'application de communication ; et
un dispositif de commande de communication (100) selon l'une des revendications 1 à 6, prévu pour commander l'accès du terminal à un dispositif de service (300) au moyen de l'unité de traitement d'application de communication.

8. Système de communication anonyme, comprenant :
un terminal d'utilisateur (200) selon la revendication 7 ;
un dispositif de service (300) ;
un dispositif de communication anonyme (400) prévu pour réaliser une communication anonyme entre le terminal d'utilisateur et le dispositif de service ; et
un dispositif de commande de communication (100) selon l'une des revendications 1 à 6.

9. Système de communication anonyme selon la revendication 8, comprenant le dispositif de commande de communication (100) selon la revendication 4, le dispositif de communication anonyme étant prévu pour établir la communication anonyme entre le terminal d'utilisateur et le dispositif de service avec le degré d'anonymat fixé.

10. Système de communication anonyme selon la revendication 8, où
le dispositif de communication anonyme (400) qui est prévu pour établir la communication anonyme est prévu pour chaque moyen d'une pluralité de moyens de communication, et
où le dispositif de service (300) est prévu pour fournir une pluralité de services en exploitant différents moyens de communication,
ledit système comprenant un dispositif de commande de communication selon la revendication 5.

11. Système de communication anonyme selon la revendication 8, où
le dispositif de communication anonyme (400) qui est prévu pour établir la communication anonyme est prévu pour chaque moyen de communication, et
où le dispositif de service (300) fournit une pluralité de services en exploitant différents moyens de communication,
ledit système comprenant un dispositif de commande de communication (100) selon la revendication 6.

12. Système de communication anonyme selon la revendication 8, comprenant un dispositif de commande de communication (100) selon la revendication 3 ou la revendication 4, où
l'information de propriété d'anonymat de service indique un degré d'anonymat associé à un attribut de service, ledit degré d'anonymat étant exigé par le fournisseur de service pour l'attribut de service,
l'information d'aptitude à une communication anonyme indique un degré d'anonymat de la communication anonyme associé à un identifiant de dispositif de communication anonyme, le dispositif de communication anonyme (400) et l'identifiant de dispositif de communication anonyme étant aptes à établir la communication anonyme, l'information d'autorisation par l'utilisateur indique un degré d'anonymat associé à l'attribut de service, ledit degré d'anonymat étant permis par l'utilisateur pour l'attribut de service, et
le dispositif de commande de communication (100) est prévu pour extraire de l'information de propriété d'anonymat de service un degré d'anonymat exigé par le fournisseur de service pour l'attribut de service contenu dans la demande de communication, pour extraire de l'information d'aptitude à une communication anonyme un degré d'anonymat de la communication anonyme pour l'identifiant du dispositif de communication anonyme (400), ledit dispositif de communication anonyme (400) étant utilisé dans un service de l'attribut de service contenu dans la demande de communication,
et pour extraire de l'information d'autorisation par l'utilisateur un degré d'anonymat permis par l'utilisateur pour l'attribut de service contenu dans la demande de communication.

13. Système de communication anonyme selon la revendication 8, comprenant un dispositif de commande de communication (100) selon la revendication 5 ou la revendication 6, où
l'information de propriété d'anonymat de service indique un degré d'anonymat associé à un identifiant de fournisseur de service, ledit degré d'anonymat étant exigé par le fournisseur de service avec l'identifiant de fournisseur de service,
l'information d'aptitude à une communication anonyme indique un degré d'anonymat de la communication anonyme associé à un identifiant de dispositif de communication anonyme, le dispositif de communication anonyme (400) et l'identifiant de dispositif de communication anonyme étant aptes à établir la communication anonyme,
et l'information d'autorisation par l'utilisateur indique un degré d'anonymat associé à l'identifiant de fournisseur de service, ledit degré d'anonymat étant permis par l'utilisateur pour l'identifiant de fournisseur de service, et
le dispositif de commande de communication (100) est prévu pour acquérir d'un attribut de service contenu dans la demande de communication l'identifiant de fournisseur de service du fournisseur de service délivrant un service, pour extraire de l'information de propriété d'anonymat de service un degré d'anonymat exigé par le fournisseur de service avec l'identifiant de fournisseur de service, pour extraire de l'information d'aptitude à une communication anonyme un degré d'anonymat de la communication anonyme pour l'identifiant du dispositif de communication anonyme (400), ledit dispositif de communication anonyme (400) étant utilisé dans un service de l'attribut de service contenu dans la demande de communication, et pour extraire de l'information d'autorisation par l'utilisateur un degré d'anonymat permis par l'utilisateur pour l'identifiant de fournisseur de service.

14. Système de communication anonyme selon la revendication 12 ou la revendication 13, où
l'information d'autorisation par l'utilisateur (111) indique un degré d'anonymat permis par l'utilisateur pour un identifiant d'utilisateur de chaque utilisateur d'une pluralité d'utilisateurs, et
où le dispositif de commande de communication (100) est prévu pour acquérir les identifiants de l'utilisateur en utilisant un attribut d'utilisateur contenu dans la demande de communication, et pour extraire de l'information d'autorisation par l'utilisateur un degré d'anonymat permis par l'utilisateur avec l'identifiant d'utilisateur.

15. Procédé de commande de communication, comprenant :
la commande d'accès d'un terminal d'utilisateur (200) à un dispositif de service (300) par l'intermédiaire d'un dispositif de communication anonyme (400), sur la base d'une information de propriété d'anonymat de service indiquant un degré d'anonymat pour un utilisateur exigé par un fournisseur de service dans un service délivré avec le dispositif de service, une information d'aptitude à une communication anonyme indiquant un degré d'anonymat d'une communication anonyme que le dispositif de communication anonyme est apte à établir, et une information d'autorisation par l'utilisateur indiquant un degré d'anonymat pour l'utilisateur permis par l'utilisateur en communication entre le terminal d'utilisateur et le dispositif de service.

16. Procédé de commande de communication selon la revendication 15, où
la commande d'accès au dispositif de service détermine si l'accès du terminal d'utilisateur au dispositif de service par l'intermédiaire du dispositif de communication anonyme est permis ou non à la réception d'une demande de communication du terminal d'utilisateur, et, si l'accès est permis, transfère la demande de communication au dispositif de communication anonyme.

17. Procédé de commande de communication selon la revendication 16, où,
quand un degré d'anonymat de la communication anonyme établie par le dispositif de communication anonyme satisfait à une condition d'un degré d'anonymat indiqué par l'information de propriété d'anonymat de service, et qu'un degré d'anonymat de la communication anonyme établie par le dispositif de communication anonyme satisfait à une condition d'un degré d'anonymat indiqué par l'information d'autorisation par l'utilisateur, la détermination si l'accès au dispositif de service est permis ou non permet l'accès du terminal d'utilisateur au dispositif de service par l'intermédiaire du dispositif de communication anonyme.

18. Procédé de commande de communication selon la revendication 16, où
la détermination si l'accès au dispositif de service est permis ou non fixe un degré d'anonymat de la communication anonyme établie par le dispositif de communication anonyme sur la base de l'information d'aptitude à une communication anonyme, de telle manière qu'un degré d'anonymat de la communication anonyme établie par le dispositif de communication anonyme satisfait à une condition d'un degré d'anonymat indiqué par l'information de propriété d'anonymat de service, et qu'un degré d'anonymat de la communication anonyme établie par le dispositif de communication anonyme satisfait à une condition d'un degré d'anonymat indiqué par l'information d'autorisation par l'utilisateur.

19. Procédé de commande de communication selon la revendication 16, où,
quand, pour chaque service d'une pluralité de services, un degré d'anonymat de la communication anonyme établie par le dispositif de communication anonyme utilisé dans le service satisfait à une condition d'un degré d'anonymat indiqué par l'information de propriété d'anonymat de service, et qu'un degré d'anonymat de la communication anonyme établie par le dispositif de communication anonyme utilisé dans le service satisfait à une condition d'un degré d'anonymat indiqué par l'information d'autorisation par l'utilisateur, la détermination si l'accès au dispositif de service est permis ou non permet l'accès du terminal d'utilisateur au dispositif de service pour tous les services d'une pluralité de services.

20. Procédé de commande de communication selon la revendication 16, où,
quand, pour tous les services d'une pluralité de services, un degré d'anonymat de la communication anonyme établie par le dispositif de communication anonyme utilisé dans le service satisfait à une condition d'un degré d'anonymat indiqué par l'information de propriété d'anonymat de service, et qu'un degré d'anonymat de la communication anonyme établie par le dispositif de communication anonyme utilisé dans le service satisfait à une condition d'un degré d'anonymat indiqué par l'information d'autorisation par l'utilisateur, la détermination si l'accès au dispositif de service est permis ou non permet l'accès du terminal d'utilisateur au dispositif de service pour tous les services d'une pluralité de services.

21. Support lisible par ordinateur avec un programme de commande de communication enregistré sur celui-ci, permettant à un ordinateur d'exécuter le procédé selon l'une des revendications 15 à 20.
